# EUROPÄISCHE PATENTANMELDUNG

(11) **EP 1 217 484 A2**
(43) Veröffentlichungstag der Anmeldung: **26.06.2002**
(21) Anmeldenummer: 01130741.0
(22) Anmeldetag: 21.12.2001
(51) Int. Cl.: G05B 19/418

(54) **Verfahren und Vorrichtung zum Objektbearbeiten**

(30) Priorität: 21.12.2000 DE 10064030
(71) Anmelder: Infineon Technologies AG, 81669 München (DE)
(72) Erfinder: Burgermann, Norbert, 9500 Villach (AT); Preschern, Christian, 9582 Latschach (AT)
(74) Vertreter: Viering, Jentschura & Partner

(57) **Zusammenfassung**

In einem Bearbeitungsprogramm wird für ein logisches Objekt bei dessen Bearbeitung an einem ersten Bearbeitungsstandort eine erste Objekt-Kennzeichnung erzeugt und bei physikalischem Transfer des Objekts an einen zweiten Bearbeitungsstandort eine zweite Objekt-Kennzeichnung, wobei mit der zweiten Objekt-Kennzeichnung angegeben wird, dass das physikalische Objekt an dem zweiten Bearbeitungsstandort bearbeitet wird und aufgrund der zweiten Objekt-Kennzeichnung von dem Bearbeitungsprogramm das logische Objekt als an dem ersten Bearbeitungsstandort verblieben interpretiert wird.

## Beschreibung

Die Erfindung betrifft ein Verfahren zum Bearbeiten eines physikalischen Objekts, eine Vorrichtung zum Bearbeiten eines physikalischen Objekts, ein Computerprogramm-Element sowie ein Computerlesbares Speichermedium.

Ein solches Verfahren und eine solche Vorrichtung zum Bearbeiten des physikalischen Objekts insbesondere im Rahmen der Fertigung von Wafern ist aus [1] bekannt.

Bei diesem Verfahren wird mittels eines Computerprogramms Workstream™ der Firma Consilium™ die Bearbeitung bzw. Herstellung einer Vielzahl von Wafern unterstützt, überwacht und gesteuert.

Üblicherweise werden Wafer während ihrer Bearbeitung zu jeweils einer Wafer-Gruppe mit einer Vielzahl von Wafern gruppiert, die im weiteren auch als Los bezeichnet wird.

Jedem Los wird eine für das Los eindeutige Identifizierungsnummer, im weiteren auch als Los-Kennzeichnung bezeichnet, zugeordnet.

Weiterhin wird in dem aus [1] bekannten Bearbeitungsprogramm jedem physikalischen Objekt, d.h. jedem Los, ein logisches Objekt, welches das physikalische Objekt in dem Bearbeitungsprogramm Workstream™ repräsentiert, zugeordnet.

Während der Wafer-Fertigungen werden die Wafer eines Loses einer Vielzahl von Bearbeitungsschritten, beispielsweise unterschiedlichen Bearbeitungsschritten zum Aufbringen unterschiedlicher Materialien (beispielsweise mittels eines Abscheideverfahrens, beispielsweise eines Abscheideverfahren aus der Gasphase, eines Sputter-Verfahrens, etc.) sowie unterschiedlichen Strukturierungsverfahren unter Einsatz von Photolithographie und unterschiedlichen Technologien zum Entfernen von Materialien, beispielsweise Nassätzen oder Trockenätzen, chemisch-mechanisches Polieren, allgemein mechanischen, physikalischen oder chemischen Material-Abtrageverfahren, unterzogen.

Gemäß dem in [1] beschriebenem Bearbeitungsprogramm werden jedem logischen Objekt und damit jedem physikalischen Objekt für jeden Bearbeitungsschritt jeweils Bearbeitungsgrößen erzeugt und dem logischen Objekt zugeordnet, mit denen beispielsweise der Bearbeitungszustand sowie Historieninformation oder weitere den Bearbeitungsschritt beschreibende Information, wie beispielsweise Information über das Bearbeitungsergebnis des oder der Wafer während des jeweiligen Bearbeitungsschritts, angegeben wird.

Das Bearbeitungsprogramm wird parallel zum tatsächlichen physikalischen Bearbeiten, d.h. dem Durchführen der einzelnen Prozessschritte zum Herstellen der Wafer, durchgeführt.

Auf diese Weise wird es möglich, dass ein Operator, der für einen Prozessschritt im Rahmen der Herstellung eines Wafers verantwortlich ist, unter Verwendung des Bearbeitungsprogramms eine schnelle und üblicherweise verlässliche Information über die jeweils zu bearbeitenden Wafer erhält.

Weiterhin ist in dem in [1] beschriebenen Programm auch eine Produktions-Regelung vorgesehen, d.h. es wird abhängig von möglicherweise entstehendem Ausschuss während der Herstellung von Wafern die Zufuhr weiterer Wafer für die Herstellung und Bearbeitung der Wafer-Rohlinge (beispielsweise unbearbeitete Silizium-Scheiben) gesteuert.

Wird ein entsprechender fehlerhafter Wafer, d.h. entstandener Ausschuss während der Herstellung festgestellt, so werden aus einem Lagerbestand, in dem die Wafer-Rohlinge gelagert sind, entsprechend der in dem Bearbeitungsprogramm vorgegebenen und gespeicherten Produktions-Bedarfsangabe weitere Scheiben für die Produktion von Wafern zugeführt, d.h. es werden weitere Lose gebildet und den Bearbeitungsschritten zum Herstellen der Wafer unterzogen.

Auf diese Weise wird anschaulich unter Verwendung des Bearbeitungsprogramms der Wafer bzw. das Los mit einer Mehrzahl von Wafern hergestellt bzw. bearbeitet.

Mit dem aus [1] bekannten Verfahren ist es jedoch nur möglich, eine Bearbeitungsfolge festzulegen und verlässlich zu verfolgen und somit zu überwachen, die vollständig an einem fest vorgegebenen Bearbeitungsstandort durchgeführt wird.

Oftmals besteht jedoch insbesondere bei der aufwendigen und sehr kostenträchtigen Herstellung von Halbleiter-Bauelementen und somit bei der Herstellung von Wafern das Bedürfnis, einzelne Teilschritte des gesamten Herstellungsprozesses, beispielsweise mehrere aufeinanderfolgende Bearbeitungsschritte, an unterschiedlichen Bearbeitungsstandorten, d.h. beispielsweise in unterschiedlichen Fabriken, durchzuführen.

Eine solche temporäre Auslagerung von einzelnen Bearbeitungsschritten im Rahmen eines Gesamtprozesses wird durch das in [1] beschriebenen Verfahren nicht unterstützt.

Im Gegenteil, wenn während der Bearbeitung eines oder mehrerer physikalischen Lose aus dem Bearbeitungsprogramm gemäß [1] ein oder mehrere logische Lose entfernt werden, so wird dieses Entfernen als Auftreten von Ausschuss interpretiert und von dem Bearbeitungsprogramm wird das Zuführen neuer Silizium-Scheiben zur Herstellung von weiteren Wafern gestartet, um die vorgegebene Anzahl fertigzustellender Wafer zu erreichen. Eine solche Fehlinterpretation würde jedoch zu einer erheblichen Überproduktion an gewünschten, zu produzierenden Wafern führen, wenn die physikalischen Lose lediglich zur Bearbeitung an einen anderen Bearbeitungsstandort ausgelagert worden sind und nach erfolgter Bearbeitung wieder in den Herstellungsprozess an dem ersten Bearbeitungsstandort eingegliedert werden.

Dieses Beispiel zeigt, dass es mit dem aus [1] bekannten Verfahren nicht möglich ist, verlässlich physikalische Objekte, insbesondere Wafer, herzustellen und deren Herstellung zu steuern, wenn zumindest ein Teil der Bearbeitungsschritte bzw. Herstellungsschritte an unterschiedlichen Bearbeitungsstandorten durchgeführt werden.

In [2] ist ein Daten-Verfolgungs-System beschrieben, mit dem die Verarbeitung gespeicherter logischer Objekte, insbesondere die Verarbeitung elektronischer Nachrichten und das Sammeln von Daten in einer Datenbank mittels einer Vielzahl von manuellen und automatisierten Verarbeitungsschritten überwacht und gesteuert wird.

In [3] ist ein Daten-Verfolgungs-System beschrieben, mit dem in einer Datenbank gespeicherte Datensätze als logische Objekte überwacht werden.

Somit liegt der Erfindung das Problem zugrunde, die Bearbeitung eines physikalischen Objektes an unterschiedlichen Bearbeitungsstandorten auf verlässliche Weise mittels eines Bearbeitungsprogramms zu unterstützen.

Das Problem wird durch das Verfahren und die Vorrichtung zum Bearbeiten des physikalischen Objekts, durch das Computerprogramm-Element sowie durch das Computerlesbare Speichermedium mit den Merkmalen gemäß den unabhängigen Patentansprüchen gelöst.

Bei einem Verfahren zum Bearbeiten eines physikalischen Objekts ist jedem physikalischen Objekt in einem Bearbeitungsprogramm ein logisches Objekt zugeordnet. Anders ausgedrückt bedeutet dies, dass in dem Bearbeitungsprogramm jeweils ein logisches Objekt in Form einer eindeutigen Kennung (Identifier) vorgesehen ist, um ein physikalisches Objekt zur Behandlung in dem Bearbeitungsprogramm zu repräsentieren.

Wird das physikalische Objekt an einem ersten Bearbeitungsstandort gemäß einem, vorzugsweise elektronischen, Arbeitsplan mit einem oder mehreren Bearbeitungsschritten bearbeitet, so wird während dieser Bearbeitung in dem Bearbeitungsprogramm zur Unterstützung und zur Überwachung der eigentlichen physikalischen Bearbeitungsschritte dem logischen Objekt eine erste Objekt-Kennzeichnung zugeordnet. Mit der ersten Objekt-Kennzeichnung wird angegeben, dass das physikalische Objekt an dem ersten Bearbeitungsstandort bearbeitet wird.

Wird das physikalische Objekt von dem ersten Bearbeitungsstandort zu einem zweiten Bearbeitungsstandort transportiert, d.h. transferiert, um dort an dem zweiten Bearbeitungsstandort ebenfalls gemäß einem weiteren, vorzugsweise dort lokal gespeicherten, elektronischen Arbeitsplan gemäß vorgegebenen Bearbeitungsschritten bearbeitet zu werden, so wird dem logischen Objekt in dem Bearbeitungsprogramm auf der Seite des ersten Bearbeitungsstandorts eine zweite Objekt-Kennzeichnung zugeordnet. Mit der zweiten Objekt-Kennzeichnung wird angegeben, dass das physikalische Objekt an dem zweiten Bearbeitungsstandort physikalisch bearbeitet wird. Die Zuordnung der zweiten Objekt-Kennzeichnung kann vor, bei oder nach dem Transport des physikalischen Objekts erfolgen.

Mit der zweiten Objekt-Kennzeichnung wird ferner erreicht, dass aufgrund der zweiten Objekt-Kennzeichnung von dem Bearbeitungsprogramm das logische Objekt als an dem ersten Bearbeitungsstandort verblieben interpretiert wird.

Anders ausgedrückt bedeutet dies, dass für unterschiedliche Aspekte, beispielsweise im Bereich der Objekt-Bearbeitungsplanung am ersten Bearbeitungsstandort im Rahmen der Weiterverarbeitung der weiteren physikalischen Objekte im Rahmen des Gesamtprozesses logisch das logische Objekt weiterhin dem ersten Bearbeitungsstandort zugeordnet bleibt, obwohl das zugehörige physikalische Objekt sich nicht mehr, zumindest temporär, an dem ersten Bearbeitungsstandort befindet.

Auf diese Weise wird erreicht, dass, obwohl ein physikalischer Transfer des physikalischen Objekts von dem ersten Bearbeitungsstandort zu dem zweiten Bearbeitungsstandort stattgefunden hat, dies zwar in dem Bearbeitungsprogramm selbst grundsätzlich erkennbar ist, jedoch durch die zweite Objekt-Kennzeichnung ebenfalls erkennbar ist, dass in im Rahmen des Bearbeitungsprogramms zumindest teilweise das zugehörige logische Objekt als am ersten Bearbeitungsstandort verblieben interpretiert wird.

Vorzugsweise wird in einzelnen Bearbeitungsschritten, die durch das Bearbeitungsprogramm unterstützt werden und bei deren Fortschreiten den für die Bearbeitungsschritte jeweils verantwortlichen Operatoren angezeigten physikalischen Objekte die ausgelagerten, an die den zweiten Bearbeitungsstandort transferierten physikalischen Objekte nicht mehr dargestellt werden, so dass eine irrtümliche Interpretation eines fehlenden physikalischen Objekts trotz Anzeige eines entsprechenden logischen Objekts als Ausschuss vermieden wird.

Nach erfolgter Bearbeitung des physikalischen Objekts am zweiten Bearbeitungsstandort und vor, bei oder nach erfolgtem Transport des physikalischen Objekts von dem zweiten Bearbeitungsstandort zu dem ersten Bearbeitungsstandort zurück, wird dem logischen Objekt in dem Bearbeitungsprogramm eine dritte Objekt-Kennzeichnung zugeordnet.

Mit der dritten Objekt-Kennzeichnung wird wiederum angegeben, dass das physikalische Objekt an dem ersten Bearbeitungsstandort bearbeitet wird.

Durch die Erfindung wird es somit möglich, auf einfache Weise einen sogenannten Schleifenprozess, d.h. das Auslagern einzelner Bearbeitungsschritte eines Gesamtprozesses mit einer Vielzahl von Bearbeitungsschritten an unterschiedlichen Bearbeitungsstandorten vorzusehen, ohne dass komplizierte Mechanismen bereitgestellt werden müssen zur Vermeidung von Fehlinformationen im Rahmen der Bedarfsplanung und der Produktionssteuerung bei der Herstellung oder Bearbeitung physikalischer Objekte, allgemein bei der Bearbeitungsplanung eines physikalischen Objekts, insbesondere im Rahmen der Herstellung von Halbleiter-Wafern.

Anders ausgedrückt bedeutet dies, dass eine fehlerhafte Erzeugung zusätzlicher Wafer aufgrund einer fehlerhaften Klassifikation fehlender logischer Objekte als physikalischen Ausschuss, verhindert wird.

Eine Vorrichtung zum Bearbeiten eines physikalischen Objekts weist mindestens einen Prozessor auf, der so eingerichtet ist, dass die oben beschriebenen Verfahrensschritte durchgeführt werden können.

Somit kann die Erfindung sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

In einem Computerlesbaren Speichermedium ist ein Bearbeitungsprogramm zum Bearbeiten eines physikalischen Objekts gespeichert, wobei jedem physikalischen Objekt in dem Bearbeitungsprogramm ein logisches Objekt zugeordnet ist, welches Bearbeitungsprogramm, wenn es von einem Prozessor ausgeführt wird, die oben beschriebenen Verfahrensschritte aufweist.

Ein Bearbeitungsprogramm-Element (Computerprogramm-Element) zum Bearbeiten eines physikalischen Objekts, wobei jedem physikalischen Objekt in dem Bearbeitungsprogramm ein logisches Objekt zugeordnet ist, weist die oben beschriebenen Verfahrensschritte auf, wenn es von einem Prozessor ausgeführt wird.

Bevorzugte Weiterbildungen der Erfindung ergeben sich aus den abhängigen Ansprüchen.

Gemäß einer Ausgestaltung der Erfindung ist es vorgesehen, dass die erste Objekt-Kennzeichnung gleich der dritten Objekt-Kennzeichnung ist.

Auf diese Weise wird eine weitere Vereinfachung im Rahmen der Organisation und der Überwachung der einzelnen logischen Objekte bzw. physikalischen Objekte erreicht.

Gemäß einer weiteren Ausgestaltung der Erfindung ist es ferner vorgesehen, zu dem logischen Objekt jeweils eine Bearbeitungshistorie (objektspezifisches, d.h. insbesondere losspezifisches, Bearbeitungsprotokoll) des zugehörigen physikalischen Objekts zu speichern, in der die einzelnen Bearbeitungsschritte, denen das physikalische Objekt unterzogen wird, sowie mögliche Bearbeitungsparameter, Bearbeitungsergebnisse oder andere Ereignisse, die während der jeweiligen Bearbeitung aufgetreten sind, gespeichert sind.

Die Bearbeitungsparameter können jeweils einen oder mehrere Bearbeitungsschritte charakterisieren, insbesondere hinsichtlich besonderer Vorkommnisse oder Gegebenheiten wie beispielsweise Fehler, besondere Prozessbedingungen, zeitliche Verzögerungen bei der Bearbeitung, etc.

Die Bearbeitung des physikalischen Objekts kann gemäß einem elektronischen Arbeitsplan erfolgen, wobei in dem elektronischen Arbeitsplan die jeweiligen Bearbeitungsschritte zum Bearbeiten eines physikalischen Objekts zur Herstellung für ein vorgegebenes Produkt enthalten sind.

Der Arbeitsplan kann sowohl vollständig lokal in einem Computer an einem Betriebsstandort gespeichert sein oder auch zentral in einem Server-Computer, der über eine Kommunikationsschnittstelle und ein Kommunikationsnetz mit einem Computer an dem jeweiligen Betriebsstandort, welcher Computer das jeweilige Bearbeitungsprogramm ausführt, gekoppelt ist.

Der Arbeitsplan kann zur Herstellung eines vorgegebenen Produkts jeweils unterschiedliche Bearbeitungsschritte enthalten, abhängig von jeweiligen an einem Bearbeitungsstandort verfügbaren Technologien und/oder verfügbaren Maschinen und Geräten, welche Bearbeitungsschritte insgesamt einen Gesamtprozess zur Herstellung eines Produkts beschreiben.

Anders ausgedrückt bedeutet dies, dass der Arbeitsplan teilweise mehrere unterschiedliche, voneinander unabhängige Teilarbeitspläne enthalten kann, die jeweils von einem gemeinsamen Anfangs-Zwischenprodukt bis zu einem gemeinsamen End-Zwischenprodukt unterschiedliche Bearbeitungsschritte vorsehen, bis zu dem Anfangs-Zwischenprodukt bzw. ab dem End-Zwischenprodukt jedoch wieder dieselben Bearbeitungsschritte enthalten.

Gemäß einer weiteren Ausgestaltung der Erfindung ist es vorgesehen, dass zu Beginn des Verfahrens von dem Bearbeitungsprogramm überprüft wird, ob eine Bearbeitung des physikalischen Objekts an dem zweiten Bearbeitungsstandort überhaupt zulässig ist. Das Verfahren wird von dem Bearbeitungsprogramm nur dann fortgesetzt, wenn die Bearbeitung des physikalischen Objekts an dem zweiten Bearbeitungsstandort tatsächlich zulässig ist.

Eine solche Überprüfung kann beispielsweise anhand von Stammdaten, die dem logischen Objekt und damit dem physikalischen Objekt zugeordnet sind, erfolgen oder anhand des elektronischen Arbeitsplans, der diese Information zusätzlich enthalten kann.

Durch diese Ausgestaltung der Erfindung wird eine weitere Beschleunigung des gesamten Verfahrens insbesondere im Rahmen des industriellen Einsatzes zum Bearbeiten einer großen Anzahl physikalischer Objekte in einem umfangreichen und komplexen Gesamtprozess bzw. einer Vielzahl unterschiedlicher Prozesse zur Herstellung einer Vielzahl unterschiedlicher Produkte möglich.

Von einem Server-Computer können dem physikalischen Objekt zugeordnete Stammdaten, die unterschiedliche Informationen über das physikalische Objekt, unterschiedliche für das physikalische Objekt vorgesehene Bearbeitungsschritte sowie das jeweils herzustellende Produkt enthalten, an das Bearbeitungsprogramm übermittelt werden. Allgemein wird mit den Stammdaten das physikalische Objekt charakterisiert.

Gemäß einer weiteren Ausgestaltung der Erfindung ist es vorgesehen, dass zumindest ein Teil der Stammdaten von dem Bearbeitungsprogramm am ersten Bearbeitungsstandort zu einem weiteren Bearbeitungsprogramm am zweiten Bearbeitungsstandort übertragen wird. Von dem weiteren Bearbeitungsprogramm wird zumindest ein Teil der Stammdaten verändert und zumindest ein Teil der Stammdaten und/oder ein Teil der veränderten Stammdaten werden zu dem Bearbeitungsprogramm an dem ersten Bearbeitungsstandort zurück übertragen.

Anschaulich kann diese Vorgehensweise als Verwendung global sichtbarer Variablen, d.h. global sichtbarer Attributen eines logischen Objekt betrachtet werden, d.h. es werden Daten verwendet, die ein physikalisches Objekt charakterisieren und sowohl von dem Bearbeitungsprogramm an dem ersten Bearbeitungsstandort als auch von dem Bearbeitungsprogramm an dem zweiten Bearbeitungsstandort verändert werden können. Durch entsprechenden Austausch der Stammdaten bzw. veränderten, d.h. aktualisierten, Stammdaten und durch ständige Verwendung der jeweils aktuellsten Stammdaten im Rahmen des gesamten Bearbeitungsschrittes bzw. des gesamten Bearbeitungsprozesses wird gewährleistet, dass jeweils der aktuellste Zustand und die aktuellsten Informationen über das logische Objekt und damit über das physikalische Objekt verfügbar sind und verwendet werden können, wodurch mögliche Fehler in der Bearbeitung oder in der Überwachung der Bearbeitung vermieden werden.

Die Erfindung eignet sich insbesondere zum Einsatz im Rahmen der Bearbeitung bzw. Herstellung einer Vielzahl von Wafern, wobei jeweils eine Mehrzahl von Wafern zu einer Wafer-Gruppe gruppiert sind, die auch als (Wafer-)Lose bezeichnet werden. In diesem Fall wird jedem Los an dem ersten Bearbeitungsstandort eine erste Objekt-Kennzeichnung zugeordnet, bei dessen Transport zu einem zweiten Bearbeitungsstandort eine zweite Objekt-Kennzeichnung sowie bei Rücktransport zu dem ersten Bearbeitungsstandort eine dritte Los-Kennzeichnung.

Ausführungsbeispiele der Erfindung sind in den Figuren dargestellt und werden im Weiteren näher erläutert.

Es zeigen
- Figur 1: ein Blockdiagramm, in dem das Zusammenwirken des ersten Bearbeitungsstandorts mit dem zweiten Bearbeitungsstandort sowohl auf physikalischer Ebene als auch auf logischer Ebene dargestellt ist;
- Figur 2: ein Blockdiagramm, in dem die Übertragung von Transferlisten dargestellt ist;
- Figuren 3a bis 3c: Darstellungen von Beispielparametern einer Transferliste gemäß einem Ausführungsbeispiel der Erfindung;
- Figur 4: ein Blockdiagramm, in dem die Software-Architektur des Bearbeitungsprogramms an dem ersten Bearbeitungsstandort dargestellt ist;
- Figur 5: ein Ablaufdiagramm, in dem der Nachrichtenaustausch zwischen zwei Programmkomponenten des Bearbeitungsprogramms gemäß einem Ausführungsbeispiel der Erfindung dargestellt ist;
- Figuren 6a und 6b: Skizzen zweier Bildschirmoberflächen zur Eingabe von Stammdaten (Figur 6a) bzw. zur Definition des Schleifenprozesses (Figur 6b) gemäß einem Ausführungsbeispiel der Erfindung dargestellt sind;
- Figuren 7a und 7b: Skizzen von Versandscheinen für den Transport von Losen von dem ersten Bearbeitungsstandort zu dem zweiten Bearbeitungsstandort (Figur 7a) bzw. für den Transport von dem zweiten Bearbeitungsstandort zurück zu dem ersten Bearbeitungsstandort (Figur 7b);
- Figur 8: ein Ablaufdiagramm, in dem der Nachrichtenfluss zwischen zwei Programmkomponenten des weiteren Bearbeitungsprogramms an dem zweiten Bearbeitungsstandort gemäß dem Ausführungsbeispiel der Erfindung dargestellt sind.
- Figur 9: ein Nachrichtenflussdiagramm, in dem die von einem Bearbeitungsprogramm an dem ersten Bearbeitungsstandort durchgeführten Verfahrensschritte nach Empfang einer zweiten Transfer-Nachricht gezeigt sind.

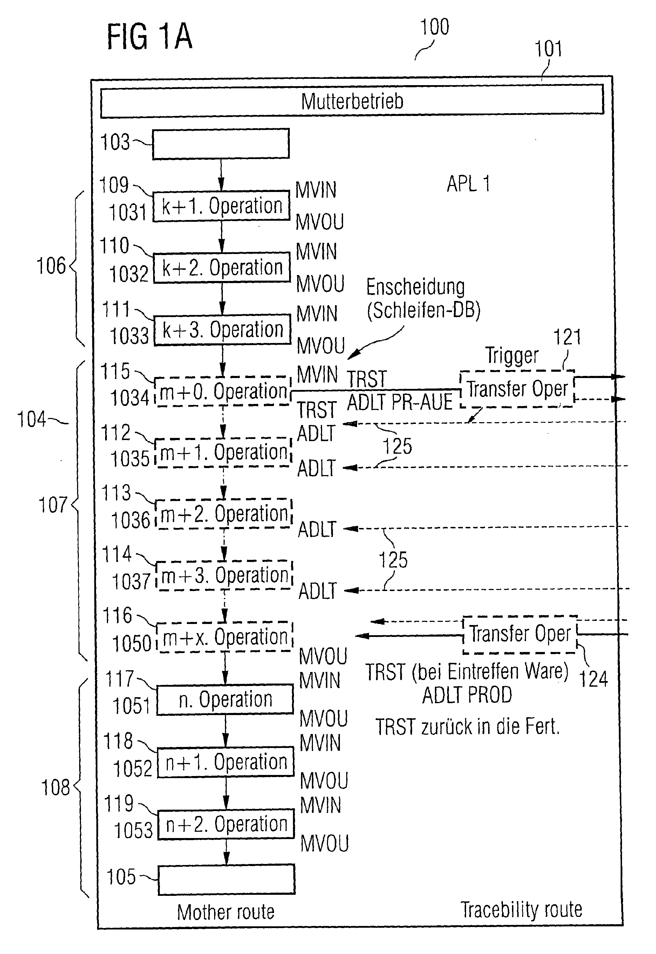

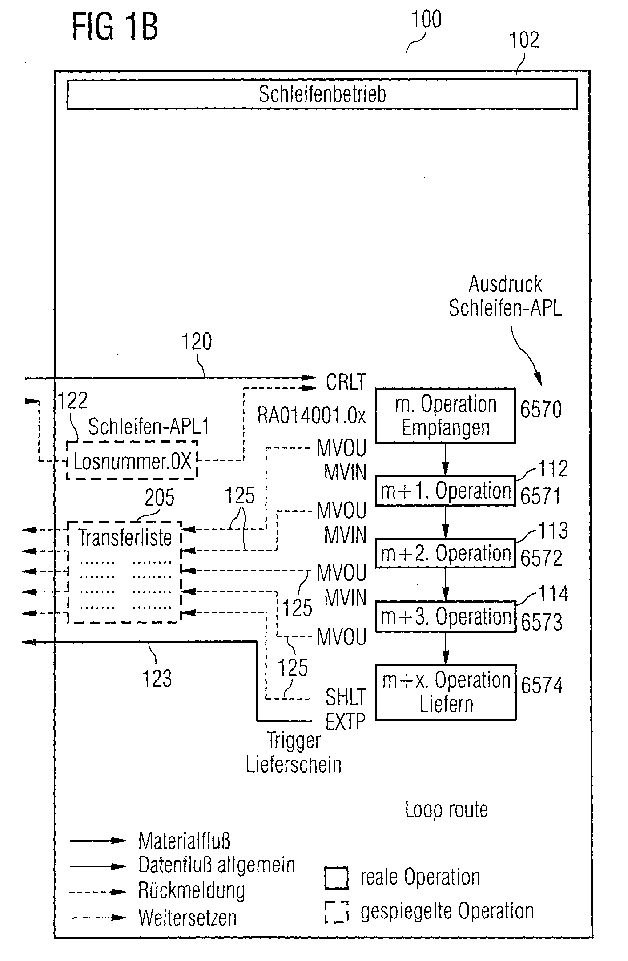

**Fig.1** zeigt ein Blockdiagramm 100, in dem die einzelnen Bearbeitungsschritte zur Herstellung von Wafern gemäß dem Ausführungsbeispiel der Erfindung sowohl auf physikalischer Ebene als auch auf logischer Ebene dargestellt sind.

Gemäß diesem Ausführungsbeispiel werden Wafer-Rohlinge jeweils zu einer Gruppe, die im Weiteren als Los 103 bezeichnet wird, einer Vielzahl von Bearbeitungsschritten unterzogen, an deren Ende eine gemäß einem vorgegebenen Arbeitsplan, wie er im Weiteren näher erläutert wird, hergestellte Mehrzahl von Wafern bereitgestellt wird.

Die Lose 103 werden an einem ersten Bearbeitungsstandort 101, auch als Mutterbetrieb bezeichnet, einer Vielzahl von Bearbeitungsschritten unterzogen.

Im Bereich der Wafer-Fertigung sind gemäß diesem Ausführungsbeispiel unter anderem folgende mögliche Bearbeitungsschritte vorgesehen, die entsprechend dem im Weiteren beschriebenen Arbeitsplan zur Beschreibung der einzelnen Bearbeitungsschritte enthalten sein können, beispielsweise mit einer genauen Angabe weiterer Bearbeitungsparameter (z.B. Prozessbedingungen wie Temperatur, Druck, Zeitdauer des Bearbeitungsschritts, etc.):
- Verfahren zur Erzeugung von Schichten (beispielsweise Verfahren zur Abscheidung aus der Gasphase (CVD-Verfahren), thermische Oxidation, Aufdampfverfahren, Sputter-Verfahren, Verfahren zur Schleuderbeschichtung, Schichterzeugung mittels Ionenimplantation, Schichterzeugung mittels Wafer-Bonding und Rückätzen, Temperverfahren, etc.),
- Lithographie-Verfahren (beispielsweise Schritte zum Ausbilden von Photoresiststrukturen, optische Belichtungsverfahren, Röntgenlithographieverfahren, Ionenlithographieverfahren, etc.),
- Verfahren zum Entfernen von Schichten (beispielsweise Nassätzen, nasschemisches Ätzen, chemisch-mechanisches Polieren, Trockenätzen, physikalisches Trockenätzen, chemisches Trockenätzen, chemisch-physikalisches Trockenätzen, etc.),
- Dotieren einer Schicht mittels Dotier-Atomen (beispielsweise thermische Dotierung, Dotierung mittels Ionenimplantation, Aktivierung und Diffusion von Dotier-Atomen, Diffusion von nicht-dotierenden Stoffen, etc.),
- Reinigungsschritte.

Zur Herstellung eines vorgegebenen Produkts, d.h. einer bestimmten Art eines Wafers, ist somit in einem im Weiteren noch näher erläuterten Arbeitsplan eine Folge von Bearbeitungsschritten angegeben, die erforderlich sind, um aus den Wafer-Rohlingen den jeweils gewünschten Wafer, d.h. das jeweilige Produkt, zu fertigen.

Anders ausgedrückt bedeutet dies, dass die Lose 103 für den Fall, dass ein vorgegebenes Produkt aus den Losen 103 hergestellt werden soll, jeweils den Bearbeitungsschritten unterzogen werden, die in dem jeweils, beispielsweise sogar für den jeweiligen Bearbeitungsstandort, spezifischen Arbeitsplan angegeben sind.

Gemäß diesem Ausführungsbeispiel ist es vorgesehen, dass ein Teil der Bearbeitungsschritte des gesamten Herstellungsprozesses an einem zweiten Bearbeitungsstandort 102 durchgeführt wird.

Die Auslagerung einzelner Bearbeitungsschritte an den zweiten Bearbeitungsstandort 102 kann aus unterschiedlichen Gründen vorgesehen sein, beispielsweise aufgrund von fertigungstechnischen Engpässen an dem ersten Bearbeitungsstandort 101 oder aufgrund der Tatsache, dass einzelne Bearbeitungsschritte an dem ersten Bearbeitungsstandort 101 gar nicht durchgeführt werden können, beispielsweise wegen fehlender Ausrüstung.

Das Blockdiagramm 100 repräsentiert sowohl den physikalischen, d.h. materiellen Verlauf des Herstellungsverfahrens der Wafer als auch die logische Beschreibung der einzelnen Bearbeitungsschritte mittels eines Bearbeitungsprogramms.

Anders ausgedrückt bedeutet dies, dass jedem physikalisch existierenden Wafer, insbesondere jedem Los 103, eine Wafer-Kennzeichnung und/oder eine Los-Kennzeichnung in einem Bearbeitungsprogramm, welches im Weiteren näher erläutert wird, zugeordnet ist, um eine Überwachung der einzelnen physikalischen Bearbeitungsschritte unter Verwendung des Bearbeitungsprogramms zu ermöglichen.

Während der einzelnen Bearbeitungsschritte wird in einer Protokolldatei jeweils zu jedem logischen Objekt 103 eine elektronische Historiendatei (Protokolldatei der einzelnen Bearbeitungsschritte) geführt und gespeichert, in der unterschiedliche Informationen über die jeweiligen Bearbeitungsschritte, denen das jeweilige physikalische Objekt, d.h. das jeweilige Los 103, unterzogen worden ist, gespeichert sind.

Auf diese Weise wird beispielsweise in der elektronischen Historiendatei für jedes Los 103 gespeichert, beispielsweise
- wie viel Ausschuss, d.h. wie viele fehlerhafte Wafer, aufgrund des jeweiligen Bearbeitungsschrittes entstanden ist,
- Angaben über die einzelnen Bearbeitungsschritte selbst, beispielsweise die Start-Zeit des jeweiligen Bearbeitungsschritts, Zeit der Beendigung des jeweiligen Bearbeitungsschritts, Parameter, die z.B. beschreiben, welche Prozessbedingungen während des Bearbeitungsschritts geherrscht haben,
- möglicherweise entstandene Fehler an den Wafern, wobei die Fehler nicht notwendigerweise zu einem Ausschuss des Wafers führen müssen, sondern auch Fehler sein können, die lediglich die Verlässlichkeit des jeweiligen Wafers in dem Los 103 beschreiben und dazu führen, dass der jeweilige Wafer in weiteren Bearbeitungsschritten hinsichtlich eines Ausfalls anfälliger wird.

**Fig.1** zeigt ferner den gesamten Herstellungsprozess 104 mit einer Vielzahl von Bearbeitungsschritten, denen jedes Los 103 unterzogen wird, wobei nach Beendigung, d.h. nach Durchführen aller Bearbeitungsschritte das fertiggestellte Los 105, d.h. die fertiggestellten Wafer gemäß dem Gesamtprozess 104 hergestellt sind.

Gemäß diesem Ausführungsbeispiel ist der Gesamtprozess 104 zur einfacheren Darstellung in drei Bearbeitungssequenzen, eine erste Bearbeitungssequenz 106, eine zweite Bearbeitungssequenz 107, sowie eine dritte Bearbeitungssequenz 108, untergliedert.

Gemäß diesem Ausführungsbeispiel weist die erste Bearbeitungssequenz 106 drei Bearbeitungsschritte 109, 110 und 111 auf.

Die zweite Bearbeitungssequenz 107 weist drei physikalische Bearbeitungsschritte 112, 113, 114 auf sowie zwei im Weiteren beschriebene logische Bearbeitungsschritte 115, 116, die zum Transfer des Loses 103 von dem ersten Bearbeitungsstandort 101 zu dem zweiten Bearbeitungsstandort 102 und von diesem zurück an den ersten Bearbeitungsstandort 101 verwendet werden.

Die dritte Bearbeitungssequenz 108 weist wiederum drei Bearbeitungsschritte 117, 118, 119 auf.

Nach Durchführung der drei Bearbeitungssequenzen 106, 107, 108 ist das fertiggestellte Los 105 hergestellt.

Gemäß diesem Ausführungsbeispiel werden die Bearbeitungsschritte 109, 110, 111 der ersten Bearbeitungssequenz 106 sowie die Bearbeitungsschritte 117, 118, 119 der dritten Bearbeitungssequenz 108 an dem ersten Bearbeitungsstandort 101 durchgeführt. Die Bearbeitungsschritte 112, 113, 114 der zweiten Bearbeitungssequenz 107 werden an dem zweiten Bearbeitungsstandort 102 durchgeführt.

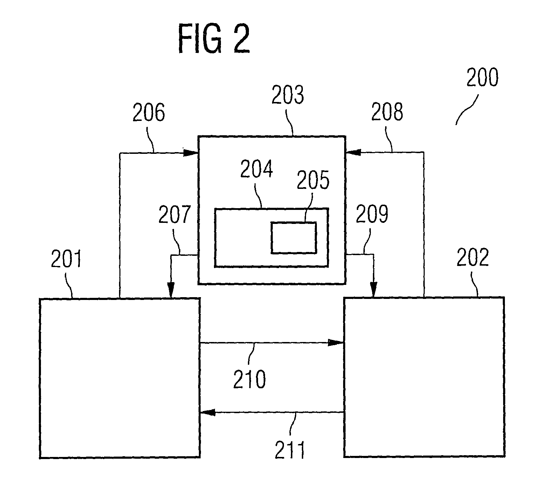

**Fig.2** zeigt in einem Blockdiagramm 200 einen ersten Computer 201, der sich am ersten Bearbeitungsstandort 101 befindet und das Bearbeitungsprogramm (gespeichert in einem Speicher des ersten Computers 201), welches im Weiteren näher erläutert wird, ausführt.

Weiterhin ist ein zweiter Computer 202 an dem zweiten Bearbeitungsstandort 102 (gespeichert in einem Speicher des zweiten Computers 202) vorgesehen, welcher ein im Weiteren beschriebenes weiteres Bearbeitungsprogramm zum Steuern und Überwachen einzelner Bearbeitungsschritte des Gesamtprozesses 104, welche am zweiten Bearbeitungsstandort 102 durchgeführt werden, ausführt.

Weiterhin ist ein Server-Computer 203 vorgesehen, der über ein Kommunikationsnetz (nicht dargestellt) sowohl mit dem ersten Computer 201 als auch mit dem zweiten Computer 202 gekoppelt ist.

Weiterhin sind über das Kommunikationsnetz der erste Computer 201 und der zweite Computer 202 miteinander gekoppelt.

In dem Speicher 204 des Server-Computer 203 ist eine Transferliste 205 gespeichert.

Die Transferliste 205 ist eine Datenbank, in der Informationen zu erlaubten Schleifenprozessen für unterschiedliche Produkte enthalten sind.

Zu jedem Produkt sind die einzelnen Bearbeitungsschritte zur Herstellung des Produkts sowie eventuelle Bearbeitungsparameter zur Definition einzelner Rahmenbedingungen während der Bearbeitungsschritte sowie die Reihenfolge der durchzuführenden Bearbeitungsschritte enthalten.

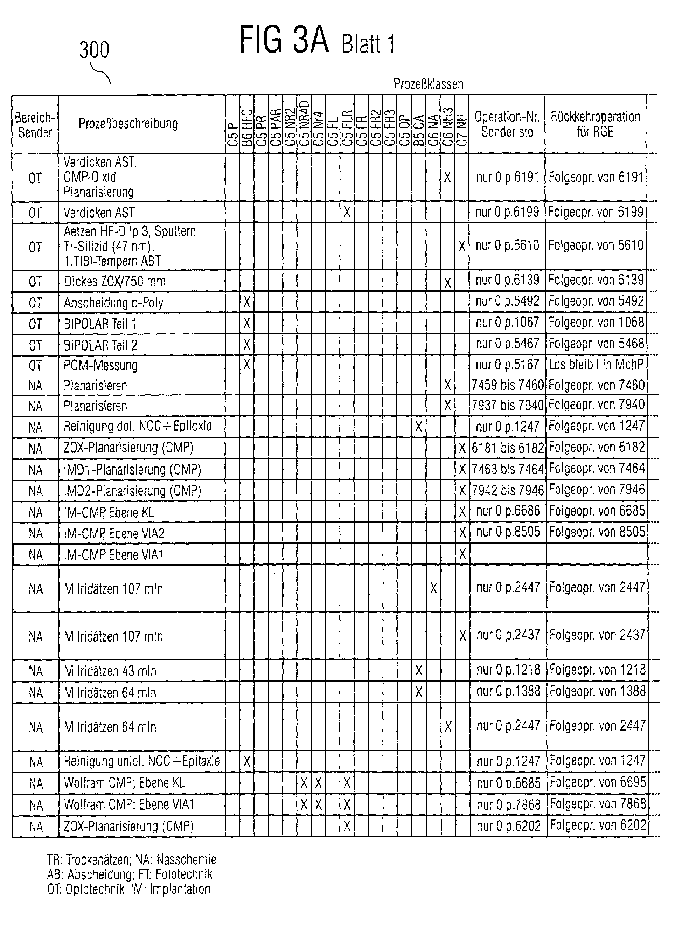

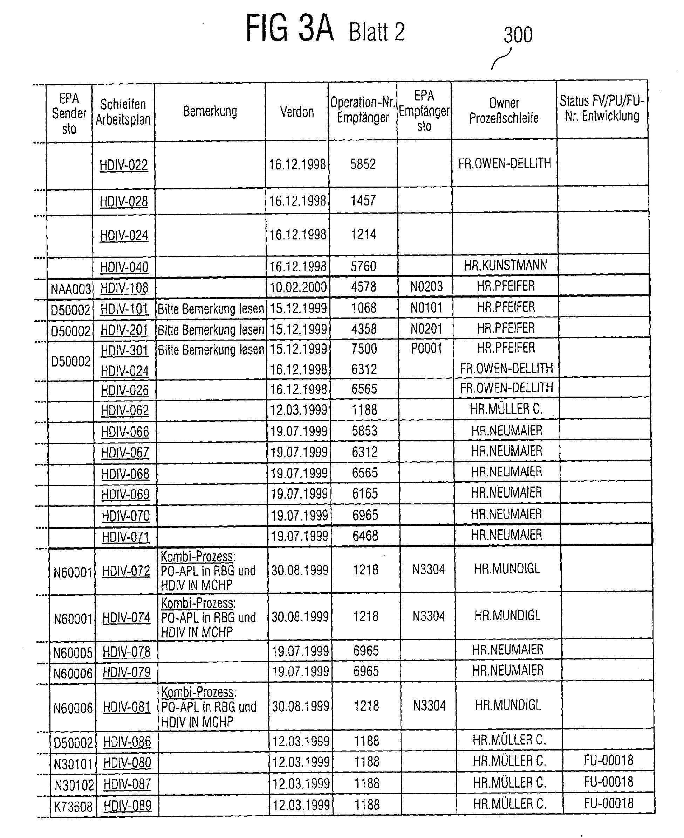

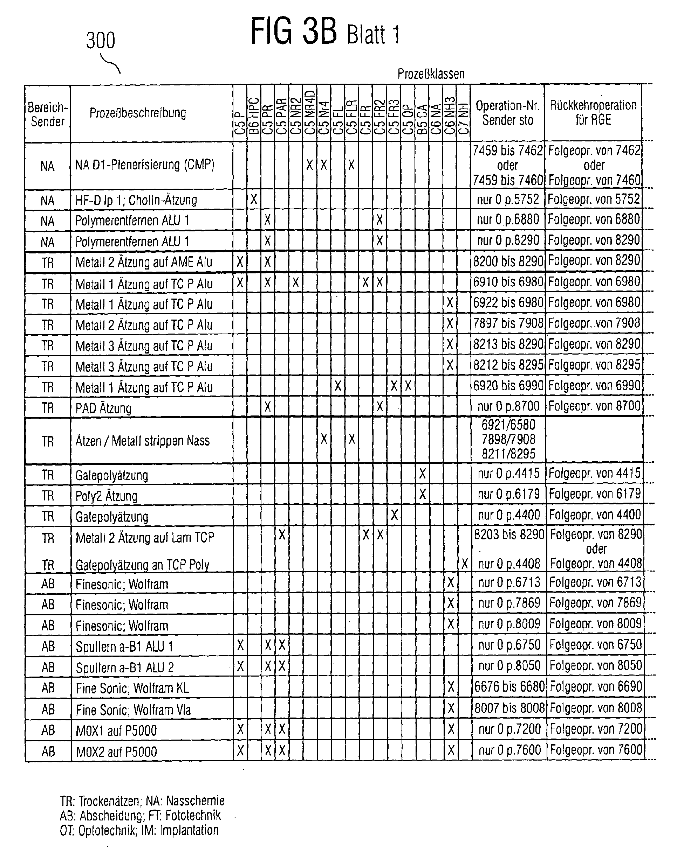

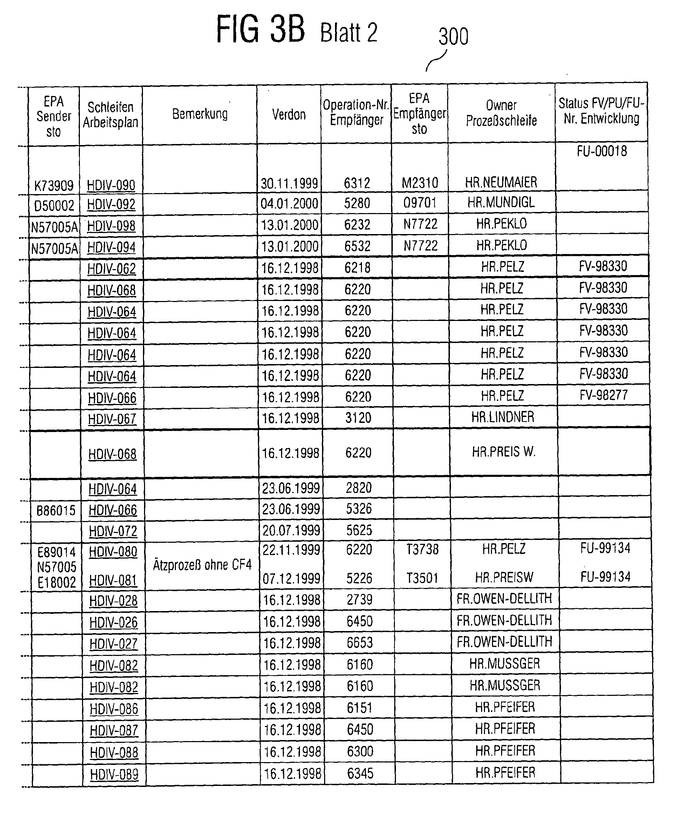

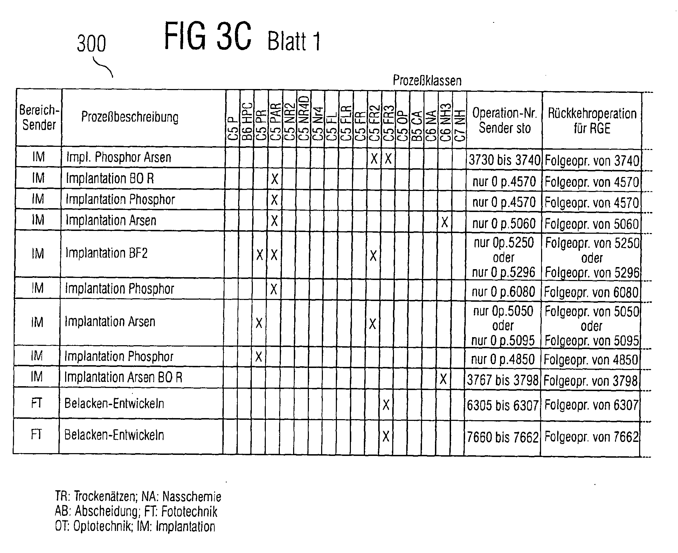

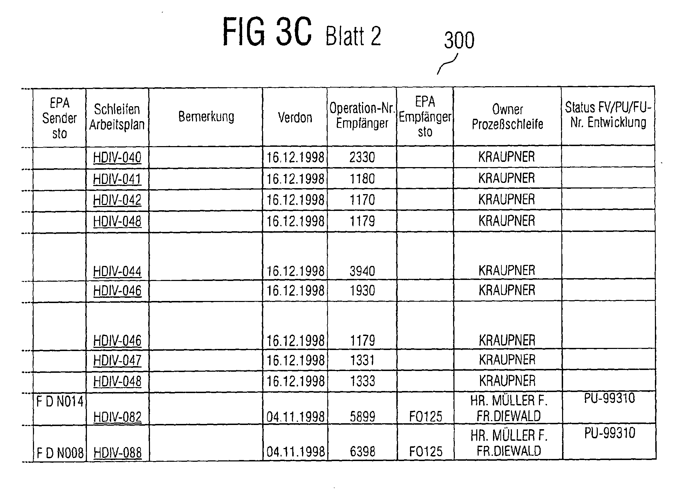

Weiterhin ist in der Transferliste 205 enthalten, ob ein oder mehrere Bearbeitungsschritte im Rahmen des jeweiligen Gesamtprozesses an unterschiedlichen Bearbeitungsstandorten durchgeführt werden dürfen (vgl. Transferlisten-Beispiel 200 in **Fig.3a, Fig.3b, Fig.3c**).

Diese entsprechende Information ist jeder Bearbeitungssequenz jeweils separat in der Transferliste 205 zugeordnet.

Somit sind anschaulich in der Transferliste 205 Informationen zu den Schleifenprozessen für die unterschiedlichen Produkte enthalten.

Weiterhin ist für Bearbeitungssequenzen, die mittels unterschiedlicher Geräte oder Technologien durchgeführt werden können, jeweils eine entsprechend der vorgesehenen Möglichkeiten Bearbeitungssequenz mit alternativ verwendbaren Bearbeitungsschritten zur Implementierung der jeweiligen Bearbeitungssequenz vorgesehen, jeweils abhängig von den an einem Bearbeitungsstandort 101, 102 zur Verfügung stehenden Technologien bzw. Geräten.

Auf diese Weise wird es standort-spezifisch möglich, die jeweils tatsächlich durchzuführenden und an dem jeweiligen Bearbeitungsstandort 101, 102 durchführbaren Bearbeitungsschritte im Rahmen des Gesamtprozesses 104 zur Herstellung eines jeweils vorgegebenen Produkts auszuwählen und zu bestimmen.

In der Transferliste 205 sind gemäß diesem Ausführungsbeispiel die folgenden Angaben gespeichert:
- Eine Angabe über einen erlaubten Ausstiegspunkt oder mehrere erlaubte Ausstiegspunkte, d.h. eine Angabe über Bearbeitungsschritte, von denen ausgehend oder nach deren Durchführung ein Transfer eines physikalischen Loses und dessen Bearbeitung an einem weiteren Bearbeitungsstandort zulässig ist, gemäß diesem Ausführungsbeispiel der Bearbeitungsschritt 115;
- eine Angabe über die jeweils erlaubte Transferoperation;
- eine Angabe, auf welches jeweilige Produkt sich die weiteren Attribute beziehen;
- eine Angabe über einen oder mehrere erlaubte Zielstandorte; und/oder
- einen Verweis auf einen eindeutig identifizierbaren Zielarbeitsplan, d.h. einen Verweis auf einen Arbeitsplan mit Bearbeitungsschritten, die an dem Ziel-Bearbeitungsstandort durchgeführt werden sollen, wobei der jeweilige Zielarbeitsplan an dem Ziel-Bearbeitungsstandort verfügbar ist.

Mittels einer ersten Anfragenachricht 206 wird von dem ersten Computer 201 zumindest ein Teil aus der Transferliste 205 für ein vorgegebenes Produkt, erfragt. Anschaulich wird auf diese Weise erfragt, ob der geplante Transfer gemäß der Transferliste für das vorgegebene Produkt erlaubt ist.

Nach Auslesen des Teils der angeforderten Transferliste 205 wird der Teil oder die gesamte Transferliste 205 als Antwortnachricht 207 zu dem ersten Computer 201 übertragen.

Weiterhin wird gemäß dem im Weiteren beschriebenen Verfahren von dem zweiten Computer 202 eine weitere Anfragenachricht 208 an den Server-Computer 203 übermittelt, mit der von dem Server-Computer 203 ein weiterer Teil der Transferliste 205 angefordert wird zur Übertragung an den zweiten Computer 202.

Der weitere Teil der Transferliste 205 wird in Form einer weiteren Antwortnachricht 209 dem zweiten Computer 202 von dem Server-Computer 203 übermittelt.

Weiterhin wird von dem ersten Computer 201 an den zweiten Computer 202 eine erste Transfer-Nachricht 210 übermittelt, die im Weiteren näher erläutert wird.

Gemeinsam mit dem Rücktransfer eines Loses 103 nach Beendigung der Bearbeitung an dem zweiten Bearbeitungsstandort 102 wird als logische Zusatzinformation für den Rücktransfer eine zweite Transfer-Nachricht 211 von dem zweiten Computer 202 zu dem ersten Computer 201 übertragen.

Gemäß diesem Ausführungsbeispiel ist jeweils ein logisches Objekt einem Los 103 zugeordnet, wobei das logische Objekt durch eine Datenstruktur mit einer Vielzahl von Attributen, die dem jeweiligen logischen Objekt und damit dem physikalischen Objekt zugeordnet sind, in dem Bearbeitungsprogramm repräsentiert wird, wie im Weiteren näher erläutert wird.

Wie in **Fig.1** dargestellt ist, wird das Los 103 nach durchgeführter erster Bearbeitungssequenz 106 in einem ersten Schritt 115 der zweiten Bearbeitungssequenz 107 von dem ersten Bearbeitungsstandort 101 zu dem zweiten Bearbeitungsstandort 102 physikalisch transferiert.

Die physikalische Übertragung, d.h. der tatsächliche Transport des Loses 103 zu dem zweiten Bearbeitungsstandort 102, ist in **Fig.1** durch einen Transferpfeil 120 von dem ersten Bearbeitungsstandort 101 zu dem zweiten Bearbeitungsstandort 102 symbolisiert.

Weiterhin wird von dem Bearbeitungsprogramm in dem ersten Bearbeitungsstandort 101 eine Transfer-Operation 121 gestartet und es wird dem Los 103 eine zweite Objekt-Kennzeichnung in Form einer Split-Losnummer (zweite Los-Kennzeichnung) einer dem Los 103 zugeordneten ersten Los-Kennzeichnung, der Losnummer, zugeordnet, in **Fig.1** symbolisiert durch Block 122.

Mit dem physikalischen Transport des Loses 103 von dem ersten Bearbeitungsstandort 101 zu dem zweiten Bearbeitungsstandort 102 geht die Übertragung der ersten Transfer-Nachricht 210 von dem Bearbeitungsprogramm in dem ersten Bearbeitungsstandort 102 zu einem weiteren Bearbeitungsprogramm in dem zweiten Bearbeitungsstandort 102 einher, wobei die Übertragung der ersten Transfer-Nachricht 210 vor, während oder nach erfolgtem physikalischem Transfer vorgesehen sein kann.

Nach Empfang des physikalischen Loses 103 an dem zweiten Bearbeitungsstandort 102 und nach Erhalt der im Weiteren erläuterten ersten Transfer-Nachricht 210 erfolgt die Bearbeitung des physikalischen Loses 103 an dem zweiten Bearbeitungsstandort 102 gemäß der zweiten Bearbeitungssequenz 107, wobei darauf hinzuweisen ist, dass abhängig von den jeweiligen lokalen Arbeitsplänen, die Bearbeitungsschritte der zweiten Bearbeitungssequenz 107 an dem ersten Bearbeitungsstandort 101 und dem zweiten Bearbeitungsstandort 102 voneinander unterschiedlich sein können von der eigentlich durchzuführenden zweiten Bearbeitungssequenz 107 an dem ersten Bearbeitungsstandort 101.

Anders ausgedrückt bedeutet dies, dass die zweite Bearbeitungssequenz 107 an dem zweiten Bearbeitungsstandort 102 ohne weiteres andere Bearbeitungsschritte aufweisen kann als an dem ersten Bearbeitungsstandort 101, solange gewährleistet ist, dass aus dem Los 103 zu Beginn der zweiten Bearbeitungssequenz 107, egal welchen Bearbeitungsschritten welcher zweiten Bearbeitungssequenz 107 unterzogen wird, jeweils ein Los 103 mit gleichen Eigenschaften hergestellt wird.

Gleich ist den beiden zweiten Bearbeitungssequenzen 107 an den beiden Bearbeitungsstandorten somit der Anfangs-Bearbeitungszustand des jeweiligen Loses 103 und der End-Bearbeitungszustand des jeweiligen Loses 103 am Anfang bzw. am Ende der jeweiligen zweiten Bearbeitungssequenz 107.

Anders ausgedrückt bedeutet dies, dass aufgrund der an dem zweiten Bearbeitungsstandort 102 durchgeführten zweiten Bearbeitungssequenz 107 ausgehend von einem verglichen mit der zweiten Bearbeitungssequenz 107 gleichen Anfangs-Los zu einem gleichen Zwischen-End-Los, die die gleichen Anfangseigenschaften bzw. die gleichen vorgegebenen Endeigenschaften nach Bearbeitung des Loses aufweisen, die einzelnen Bearbeitungsschritte voneinander unterschiedlich ausgestaltet sein können.

Nach Durchführung der zweiten Bearbeitungssequenz 107 an dem zweiten Bearbeitungsstandort 102 wird das auf diese Weise bearbeitete Los 103 wiederum physikalisch, dieses Mal von dem zweiten Bearbeitungsstandort 102 zu dem ersten Bearbeitungsstandort 101 übertragen, in **Fig.1** symbolisiert durch einen weiteren Transferpfeil 123.

Im wesentlichen zur gleichen Zeit wird von dem zweiten Computer 202 zu dem ersten Computer 201 eine zweite Transfer-Nachricht 211 übertragen, wie im Weiteren näher erläutert wird.

Von dem Bearbeitungsprogramm 401 an dem ersten Bearbeitungsstandort 101 wird eine zweite Transferoperation 124 durchgeführt und das übertragene Los 103 wird in den Gesamtprozess 104 an dem ersten Bearbeitungsstandort 101 wieder eingegliedert.

Das Einschleusen des auf diese Weise teilweise an dem zweiten Bearbeitungsstandort 102 bearbeiteten Loses 103 erfolgt nunmehr in der dritten Bearbeitungssequenz 108 gemäß den Bearbeitungsschritten 117, 118, 119 wiederum an dem ersten Bearbeitungsstandort 101 in einer Weise, als ob auch die zweite Bearbeitungssequenz 107 tatsächlich am ersten Bearbeitungsstandort 101 durchgeführt worden wäre.

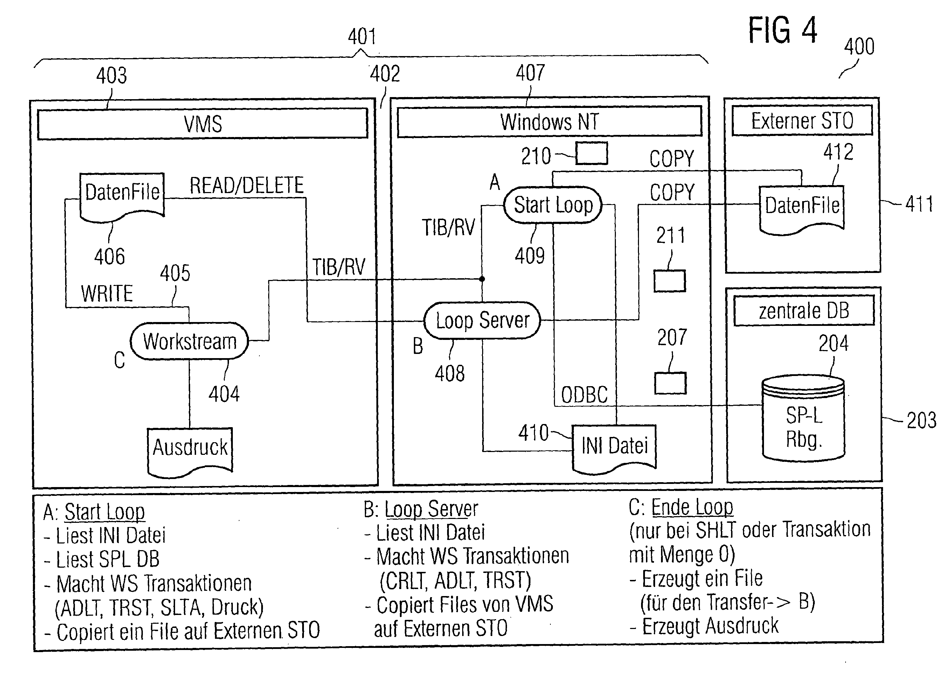

**Fig.4** zeigt die Software-Architektur 400 des Bearbeitungsprogramms 401 gemäß einem Ausführungsbeispiel der Erfindung.

Wie in **Fig.4** gezeigt ist, basiert das Bearbeitungsprogramm 401 sowohl auf dem Betriebssystem VMS 403 als auch auf dem weiteren Betriebssystem Windows NT 407, welches über eine Schnittstelle 402 mit dem Betriebssystem VMS 403 kommunizieren kann.

Unter Verwendung des Betriebssystems VMS 403 läuft das in [1] beschriebene Programmpaket 404 Workstream™ der Firma Consilium™.

Von dem Programmpaket Workstream™ 404 werden Daten 405 in eine elektronische Datei 406 geschrieben, die über die Schnittstelle 402 von einem im Weiteren beschriebenen Prozess unter Windows NT 407, im Weiteren bezeichnet als erste Programmkomponente oder Loop-Server 408, ausgelesen werden.

Im Weiteren wird das Bearbeitungsprogramm 401 näher erläutert.

Im Rahmen dieses Ausführungsbeispiels wird das Programmpaket 404 Workstream™ 5.5 oder 7.0 mit TIB/RV_APE verwendet.

In der weiteren Beschreibung werden insbesondere folgende Workstream™-Transaktionen verwendet:
- RCRL - Remote Create Lot,
- RSLA - Remote set lot attribute,
- RADL - Remote adjust Lot,
- 2TRS - Remote Transit to Store,
- 2LTS - Remote get lot status,
- 2SHC - Remote start host command.

In diesem Zusammenhang ist anzumerken, dass während des gesamten Bearbeitungsprozesses 104 das Workstream™ Programmpaket 404 gestartet ist und entsprechend dem Arbeitsplan, der die einzelnen Bearbeitungsschritte an dem ersten Bearbeitungsstandort 101 festlegt, das Durchführen der einzelnen Bearbeitungsschritte und deren Ergebnisse verfolgt und entsprechende zu den jeweiligen Losen Historienprotokolle anlegt und speichert.

Weiterhin sind unter dem Betriebssystem Windows NT 407 in dem Bearbeitungsprogramm 401 eine weitere Programmkomponente 409, die im Weiteren als zweite Programmkomponente oder als Start-Loop 409 bezeichnet wird, vorgesehen sowie eine Initialisierungsdatei 410.

Die zweite Programmkomponente Start-Loop 409 sendet die erste Transfer-Nachricht 210 zu einem weiteren Bearbeitungsprogramm 411, welches in dem zweiten Computer 202 an dem zweiten Bearbeitungsstandort 102 gespeichert ist und von dem zweiten Computer 202 ausgeführt wird.

Die erste Transfer-Nachricht 210 enthält Daten, die in einem in einer weiteren elektronischen Datei 412 vorgegebenen Verzeichnis in dem zweiten Computer 202 gespeichert wird.

Weiterhin ist die zweite Programmkomponente Start-Loop 409 mit Server-Computer 203, insbesondere mit der in dem Speicher 204 gespeicherten Datenbank, d.h. der Transferliste 205 derart gekoppelt, dass Datenbankabfragen, die im Weiteren näher erläutert sind, möglich sind, so dass die Transferliste 205 bzw. der Teil der Transferliste 205 als erste Antwortnachricht 207 an die zweite Programmkomponente Start-Loop 409 übertragen wird.

Das weitere Bearbeitungsprogramm 411 ist ferner mit der ersten Programmkomponente Loop-Server 408 derart gekoppelt, dass von dem weiteren Bearbeitungsprogramm 411 an den Loop-Server 408 die zweite Transfer-Nachricht 211 übertragen wird.

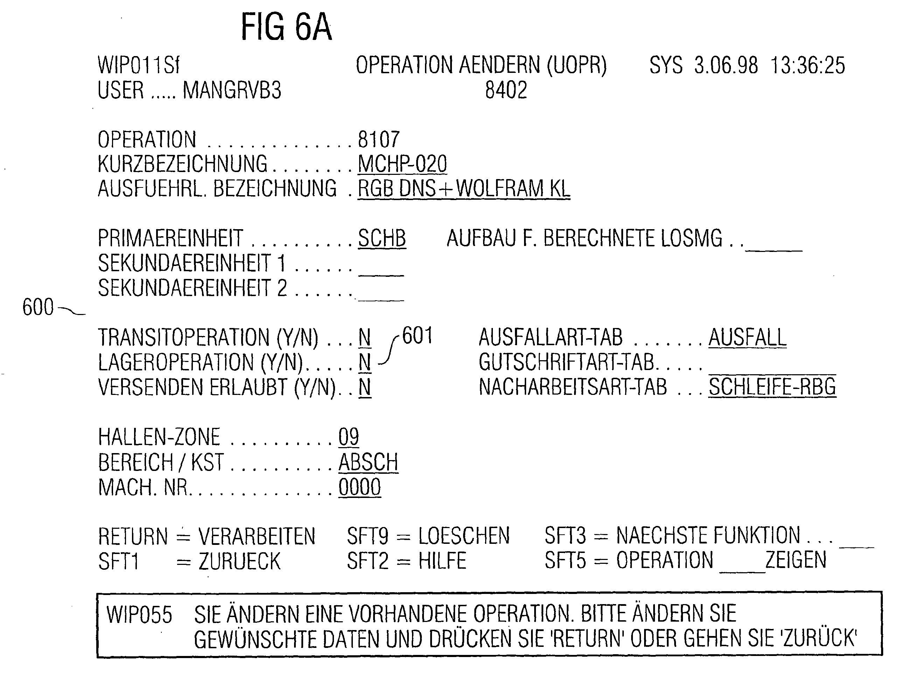

Zu Beginn des Verfahrens werden gemäß dem Programm Workstream™ mittels der in **Fig.6a** dargestellten Bildschirmmaske 600 sogenannte Stammdaten eingegeben.

In der Bildschirmmaske 600 werden zu jedem logischen Objekt, wobei ein logisches Objekt jeweils einem Los 103 zugeordnet ist, Stammdaten zugeordnet.

Die Stammdaten enthalten Informationen zu dem logischen Objekt und damit zu dem jeweiligen Los 103 und deren durchzuführenden bzw. schon durchgeführten Bearbeitungsschritte.

Gemäß der Eingaben des Benutzers in die Eingabe-Felder der Bildschirmoberfläche 600 wird die erste Transfer-Operation 121 gebildet.

Die erste Transfer-Operation 121 ist gemäß diesem Ausführungsbeispiel derart zu gestalten, dass sie keine Lager-Operation ist im Sinne des Workstream™-Programms 404, damit die Programmkomponente "Unternehmensweite Planung (CWP)" wie sie in [1] beschrieben ist, den Bestand an Wafer-Rohlingen, d.h. den Bestand noch nicht bearbeiteter Lose 103, weiterhin als an dem ersten Bearbeitungsstandort 101 existent betrachtet und somit nicht fehlerhaft annimmt, dass ein Los 103 teilweise oder vollständig als Ausschuss zu interpretieren ist, wodurch in diesem Fall ein neues Los 103 mit Wafer-Rohlingen der Produktion zugeführt würde, um die vorgegebene Anzahl von herzustellenden Wafern herzustellen.

Diese Charakterisierung, dass die erste Transfer-Operation 221 keine Lager-Operation ist, wird durch Eingabe eines "N" in das Transfer-Operations-Feld 601 und entsprechender Interpretation durch das Bearbeitungsprogramm 401 erreicht.

Weiterhin werden zu Beginn des Verfahrens weitere Stammdaten in die Transferliste eingegeben. In der Initialisierungsdatei 410 ist gespeichert, welche Transfer-Operationen für welche Schleifen, d.h. für welche möglichen Auslagerungen von Losen 103 zur weiteren Bearbeitung vorgesehen sind. In der Initialisierungsdatei 410 sind die gesamten.... s.o.

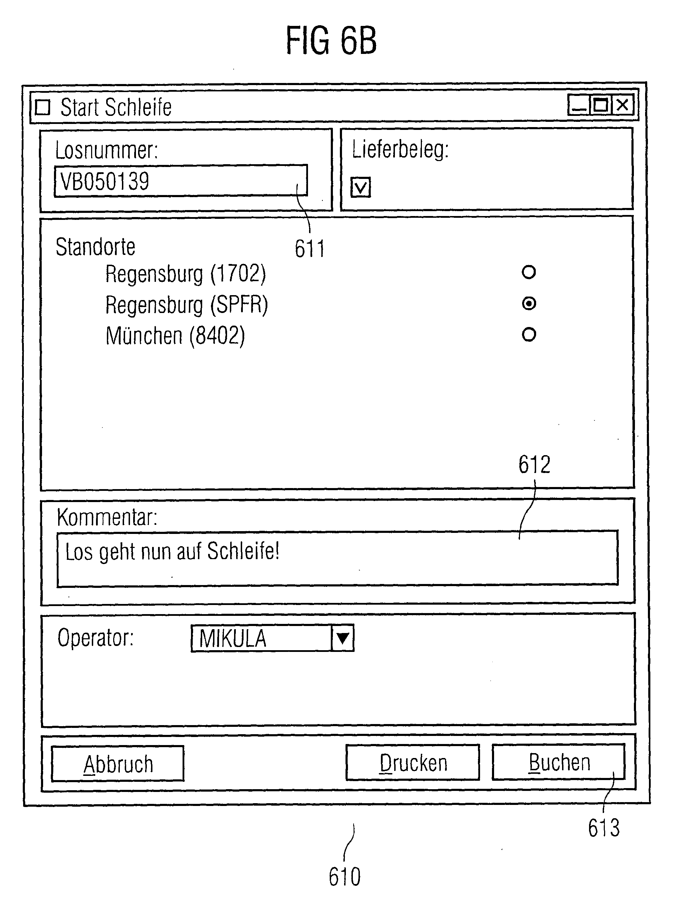

Will nun ein Benutzer des Bearbeitungsprogramms 401 an dem ersten Bearbeitungsstandort 101 ein Los 103 von dem ersten Bearbeitungsstandort 101 zur weiteren Bearbeitung zu dem zweiten Bearbeitungsstandort 102 übermitteln, so ruft er das NT Programm mit der in **Fig.6b** dargestellten Bildschirmmaske 610 auf.

Der Benutzer kann in dieser Bildschirmmaske 610 angeben, auf welche Los-Nummer (angegeben in einem von dem Benutzer auszufüllenden Los-Nummern-Feld 611) sich die folgenden Angaben beziehen.

Es wird jeweils angegeben, ob das durch die Losnummer 611 eindeutig gekennzeichnete Los 103 an einen zweiten Bearbeitungsstandort 102 übertragen werden soll: Gemäß diesem Ausführungsbeispiel stehen drei mögliche Standorte zur Auswahl zur Verfügung: zwei Standorte in Regensburg und ein Standort in München.

Durch Auswählen des jeweiligen zweiten Bearbeitungsstandorts 102 wird angegeben, dass das jeweilige Los 103 zu diesem ausgewählten Bearbeitungsstandort physikalisch übertragen werden soll.

Weiterhin ist auszuwählen, ob ein Lieferbeleg, im Weiteren auch als Versandschein bezeichnet, gedruckt werden soll.

In einem weiteren Kommentar-Feld 612 ist die Angabe eines frei vorgebbaren Kommentars möglich.

Bei Auswahl der Option "Buchen" 613 wird der logische Transfer des Loses 103 in dem Bearbeitungsprogramm 401 gestartet.

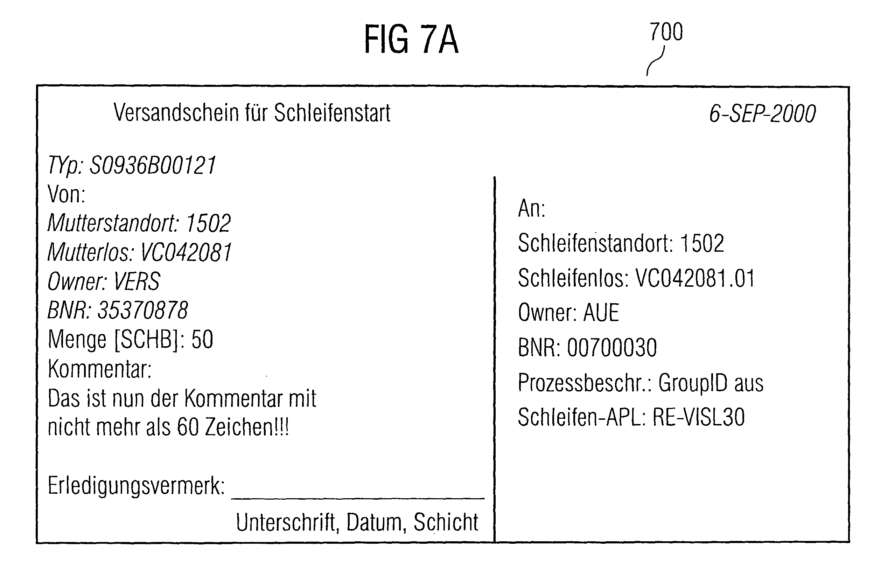

Weiterhin kann ausgehend von der zweiten Bildschirmoberfläche 610 der Versandschein 700, wie er beispielsweise in **Fig.7a** dargestellt ist, gedruckt werden und auf dem zu versendenden Los 103 aufgebracht werden.

Wird die Option "Buchen" 613 ausgewählt, so wird daraufhin die erste Transfer-Nachricht 210 von dem ersten Computer 201 gebildet und an den zweiten Computer 202 übertragen.

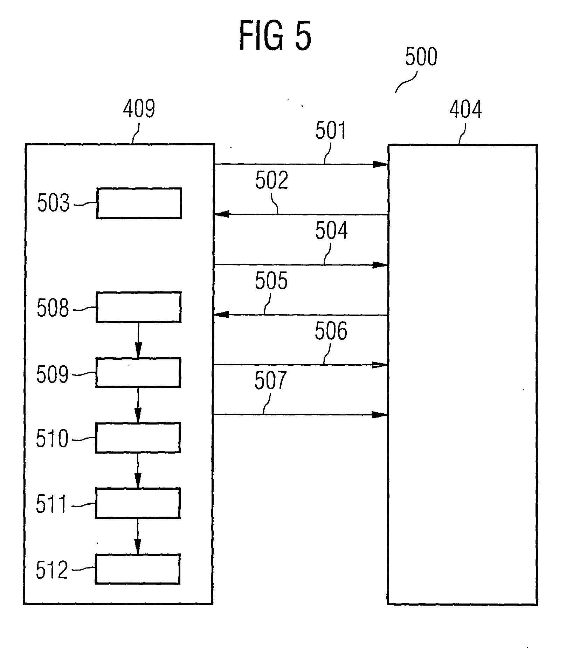

Im Weiteren wird anhand von **Fig.5** das von der zweiten Programmkomponente Start-Loop 409 durchgeführte Verfahren näher erläutert.

Bei dem im folgenden beschriebenen Ablaufdiagramm 500 wird davon ausgegangen, dass die Transferliste 205 schon in dem Bearbeitungsprogramm 401 an dem ersten Bearbeitungsstandort 101 verfügbar ist.

In einem ersten Schritt wird ein Stammdaten-Anforderungsbefehl 501 von der zweiten Programmkomponente Start-Loop 409 generiert und mittels des Stammdaten-Anforderungsbefehls von der Programmkomponente Workstream™ 404 zu einem in dem Stammdaten-Anforderungsbefehl 501 enthaltenen Los 103 die Stammdaten angefordert.

Dies erfolgt mittels des Stammdaten-Anforderungsbefehls 501
**"2LTS GetLotInfo WSGetLotInfo".**

Aufgrund des Stammdaten-Anforderungsbefehls 501 wird von Workstream™ zu dem jeweiligen Los 103 die angeforderte oder vorgegebene Menge an Stammdaten ermittelt und die Stammdaten 502 werden der Programmkomponente Start-Loop 409 zugeführt.

In einem weiteren Schritt wird anhand der Stammdaten 502, die unter anderem die Information enthalten, ob ein Auslagern einzelner Bearbeitungsschritte an einen anderen Bearbeitungsstandort 102 für das jeweilige Produkt überhaupt erlaubt ist, überprüft, ob für das Los 103 die vorgesehene Schleife, d.h. das vorgesehene Auslagern an den jeweils zuvor angegebenen zweiten Bearbeitungsstandort 102 zulässig ist.

Ergibt der Überprüfungsschritt 503, dass eine solche Auslagerung zulässig ist, so werden in einem weiteren Schritt vorgegebene global sichtbare Los-Attribute, die dem jeweiligen logischen Los zugeordnet sind, angefordert mittels eines Los-Attribut-Anforderungsbefehls 504 der Form
**"RGLA GetLotAttribute".**

Unter einem globalen Los-Attribut 505 ist ein Attribut zu verstehen, welches dem entsprechenden logischen Los und damit auch dem physikalischen Los 103 zugeordnet ist und sowohl für das Bearbeitungsprogramm 401 in dem ersten Bearbeitungsstandort 101 als auch in dem weiteren Bearbeitungsprogramm 411 an dem zweiten Bearbeitungsstandort 102 verfügbar sind und von diesen verändert werden können.

Gemäß diesem Ausführungsbeispiel sind folgende Attribute vorgesehen, die als globale Attribute jeweils einem Los 103 zugeordnet sind:
- ein Attribut, welches ein Qualitätsrisiko des Wafers beschreibt, d.h. anders ausgedrückt ein Risiko, dass der Wafer aufgrund aufgetretener Ereignisse einem Ausfallrisiko unterliegt,
- eine Angabe, ob der Wafer eine Sonderinkung enthält, sowie eine Angabe über die Sonderinkung, eine Angabe über die örtliche Position der vorzunehmenden Sonderinkung und eine Angabe darüber, welche Chips einer Sonderinkung unterzogen werden sollen;
- eine Angabe, ob ein Los an einem vorgegebenen Operationsschritt in seiner Bearbeitung gestoppt werden soll;
- eine Angabe, ob für das Los 103 eine 100%-Prüfung durchgeführt werden soll;
- eine Ausliefer-Kontierungs-Information;
- eine Priorisierungsinformation bezüglich der Dringlichkeit der Auslieferung bzw. der Herstellung des jeweiligen Loses 103; und/oder
- eine Verkaufs-Identifizierungsangabe.

Die Begriffe "globales Los-Attribut" und "lokales Los-Attribut" werden somit in diesem Zusammenhang somit analog zu den Begriffen "lokale Variable" und "globale Variable" im Rahmen einer üblichen Programmiersprache verstanden.

Mittels eines Auftragsart-Änderungsbefehls 506 der Form
**"RADL RemoteAdjustLot"**
wird die Auftragsart geändert in eine vorgegebene Auftragsart, mit der beschrieben wird, dass das entsprechende Los 103, dem diese Auftragsart zugeordnet ist, an einem weiteren Bearbeitungsstandort 102 bearbeitet wird.

Mittels eines weiteren Befehls 507 der Form
**"TRST moves a lot to a store operation"**
wird das Los logisch einer Transfer-Operation dem ersten Bearbeitungsstandort 101 zugeführt.

In einem weiteren Schritt wird mittels des Befehls
**"2GLN GenerateLotNumber"**
eine eindeutige Los-Nummer als zweite Los-Kennzeichnung für den externen, d.h. zweiten Bearbeitungsstandort 102 erzeugt (Schritt 508), gemäß diesem Ausführungsbeispiel, abhängig von der ursprünglichen Los-Nummer mittels eines sogenannten Splittens der Los-Nummer, abhängig von der Los-Nummer dieser eine eindeutige zusätzliche Endung hinzugefügt wird, mit der angegeben wird, dass sich das entsprechende Los 103 zu diesem Zeitpunkt physikalisch nicht an dem ersten Bearbeitungsstandort 101 befindet, sondern an dem zweiten Bearbeitungsstandort 102.

Es wird jedoch durch diese Art der Verwendung einer gesplitteten Los-Nummer als zweite Los-Kennzeichnung gewährleistet, dass in dem Programm Workstream™ 404 noch immer für das CWP der Programmkomponente 404 Workstream™ angezeigt wird, dass sich das entsprechende Los 103 noch in der Produktion an dem ersten Bearbeitungsstandort 101 selbst befindet, d.h., dass das Los 103 keinen Ausschuss für das Bearbeitungsprogramm 401 darstellt.

In einem weiteren Schritt (Schritt 509) werden mittels eines weiteren Befehls
**"RSLA SetLotAttributes"**
die erzeugte neue Split-Los-Nummer, ein generierter Schleifenzähler und eine Angabe über die ursprüngliche Auftragsart gespeichert.

Mit dem Schleifenzähler wird angegeben, wie viele Schleifen, d.h. wie viele Auslagerungen von dem ersten Bearbeitungsstandort 101 an den zweiten Bearbeitungsstandort 102 oder an einen weiteren Bearbeitungsstandort oder an mehrere weitere Bearbeitungsstandorte schon während des Gesamtprozesses 104 erfolgt sind.

In diesem Zusammenhang ist anzumerken, dass grundsätzlich während eines Herstellungsprozesses 404 beliebig oft ein Los 103 an einen anderen Bearbeitungsstandort zu dessen Bearbeitung ausgelagert werden kann.

In einem weiteren Schritt wird ein Prozess gestartet, der den oben beschriebenen Versandschein 700 physikalisch ausdruckt, so dass der Versandschein 700 auf dem physikalischen Los 103 aufgebracht werden kann zur Versendung an den zweiten Bearbeitungsstandort 102 (Block 510).

In einem weiteren Schritt (Schritt 511) wird eine Datei mit den erforderlichen Informationen über das Los 103 für den zweiten Bearbeitungsstandort 102 erzeugt.

In der Datei, die in der ersten Transfer-Nachricht 210 an den zweiten Computer 202 übermittelt wird (Schritt 512), gemäß diesem Ausführungsbeispiels mittels des Windows NT-Mechanismus NT-Copy, sind die globalen Los-Attribute enthalten sowie die Split-Los-Nummer zu dem entsprechenden Los.

Alternativ zu NT-Copy kann beispielsweise auch der Mechanismus gemäß dem File Transfer Protocol (FTP) oder ein beliebiger weiterer Mechanismus zum Dateitransfer eingesetzt werden, um die erste Transfer-Nachricht 210 sowie eine im Weiteren beschriebene zweite Transfer-Nachricht 211 zu übertragen.

Die erste Transfer-Nachricht 210 wird in einem ebenfalls in der ersten Transfer-Nachricht 210 angegebenen Verzeichnis auf der Empfängerseite, d.h. von dem zweiten Computer 202 gespeichert.

In dem weiteren Bearbeitungsprogramm 411, das von dem zweiten Computer 202 durchgeführt wird, ist ein Hintergrundprozess implementiert, der im Weiteren als Server-Loop bezeichnet wird.

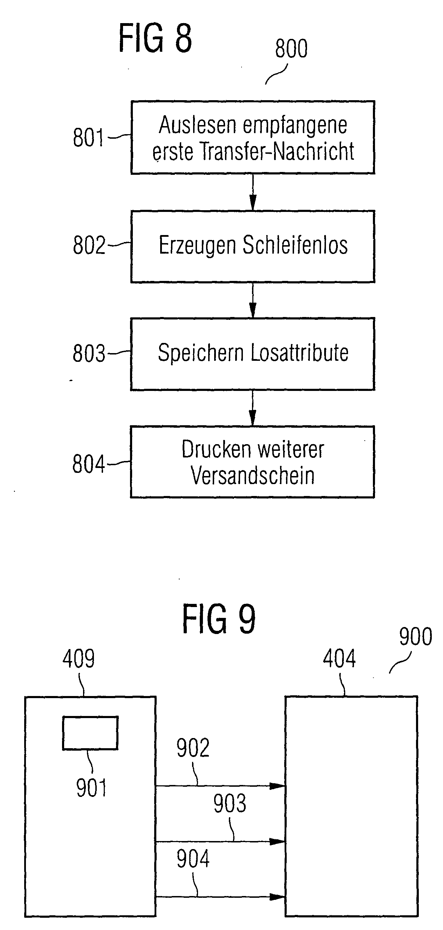

Die einzelnen von dem Hintergrundprozess durchgeführten Verfahrensschritte werden im Weiteren näher erläutert und sind in **Fig.8** in einem Ablaufdiagramm 800 dargestellt.

In einem ersten Schritt (Schritt 801) werden die in dem vorgegebenen Zie1-Verzeichnis gespeicherten ersten Transfer-Nachrichten 201 ausgelesen.

In einem weiteren Schritt (Schritt 802) wird mittels des Befehls
**"RCRL CreateLot"**
ein Schleifenlos mit der zweiten Los-Kennzeichnung an dem zweiten Bearbeitungsstandort 102 mit der entsprechenden Produktnummer, die dem Los 103 zugeordnet ist, gegründet.

In einem weiteren Schritt werden die in der ersten Transfer-Nachricht 210 enthaltenen globalen Los-Attribute in der entsprechenden Datenstruktur, die für das Los an dem zweiten Bearbeitungsstandort 102 vorgesehen ist, zum neuen Los übertragen (Schritt 803).

Dies erfolgt mittels des Befehls
**"RSLA SetLotAttributes".**

Physikalisch werden für das Los 103 an dem zweiten Bearbeitungsstandort 102 entsprechend den an dem zweiten Bearbeitungsstandort 102 für das jeweilige herzustellende Produkt angepassten Bearbeitungsschritte die jeweiligen Bearbeitungsschritte durchgeführt, d.h. es werden im Ergebnis die Bearbeitungsschritte gemäß der zweiten Bearbeitungssequenz 107 durchgeführt, jedoch angepasst an die Geräte und Technologien, die an dem zweiten Bearbeitungsstandort 102 verfügbar sind.

Sind alle Bearbeitungsschritte der zweiten Bearbeitungssequenz 107 durchgeführt, so wird von dem weiteren Bearbeitungsprogramm 411 die zweite Transfer-Nachricht 211 erzeugt, welche die zu diesem Zustand aktuell gültigen globalen Los-Attribute enthalten sind, die mittels des NT-Copy-Befehls von dem zweiten Computer 202 wieder zurück an den ersten Computer 201 übertragen werden.

In diesem Zusammenhang ist anzumerken, dass während der gesamten zweiten Bearbeitungssequenz 107, während der das Los 103 an dem zweiten Bearbeitungsstandort 102 bearbeitet wird, zu vorgegebenen Zeitpunkten oder bei Erreichen vorgegebener Zustände oder nach Durchführung vorgegebener Bearbeitungsschritte Bearbeitungsparameter, die den jeweiligen Bearbeitungsschritt charakterisieren, in die Transferliste 205 von dem weiteren Bearbeitungsprogramm 411 gespeichert und können von dem Bearbeitungsprogramm 401 aus der Transferliste 205 wieder durch entsprechende Anfragen bei dem Server-Computer 203 abgefragt werden, so dass auf der Seite des ersten Bearbeitungsstandorts 101 jederzeit alle Bearbeitungsparameter, d.h. alle interessanten Informationen über den Bearbeitungszustand des ausgelagerten Loses 103 verfügbar sind und von dem Programm Workstream™ 404 jederzeit abgerufen und ausgewertet werden können.

Alternativ können die Informationen unmittelbar von dem Computer auf der Seite des zweiten Bearbeitungsstandorts 102 zu dem Computer auf der Seite des ersten Bearbeitungsstandorts 101 automatisch mittels eines Hintergrundprozesses gebucht, d.h. übertragen werden, so dass alle interessanten Informationen über den Bearbeitungszustand des ausgelagerten Loses 103 verfügbar sind und von dem Programm Workstream™ 404 jederzeit abgerufen und ausgewertet werden können.

Dies entspricht anschaulich einer Historienfortschreibung über die Bearbeitung des physikalischen Loses 103 als logisches Los an dem ersten Bearbeitungsstandort 101.

So können beispielsweise Informationen über in den Bearbeitungsschritten erzeugten Ausschuss während der zweiten Bearbeitungssequenz 107 an dem zweiten Bearbeitungsstandort 102 berücksichtigt werden zur Steuerung der Zufuhr weiterer Roh-Lose an dem ersten Bearbeitungsstandort 101, d.h. weiterer Lose 103 mit Wafer-Rohlingen, die benötigt werden, um die vorgegebene herzustellende Anzahl von Wafern des jeweils zu produzierenden Typs zu erreichen.

Diese Möglichkeit der Kommunikation zwischen dem Bearbeitungsprogramm 401 und dem weiteren Bearbeitungsprogramm 412 über die in dem Server-Computer 203 gespeicherte Transferliste ist in **Fig.1** mittels gestrichelter Pfeile 125 symbolisiert.

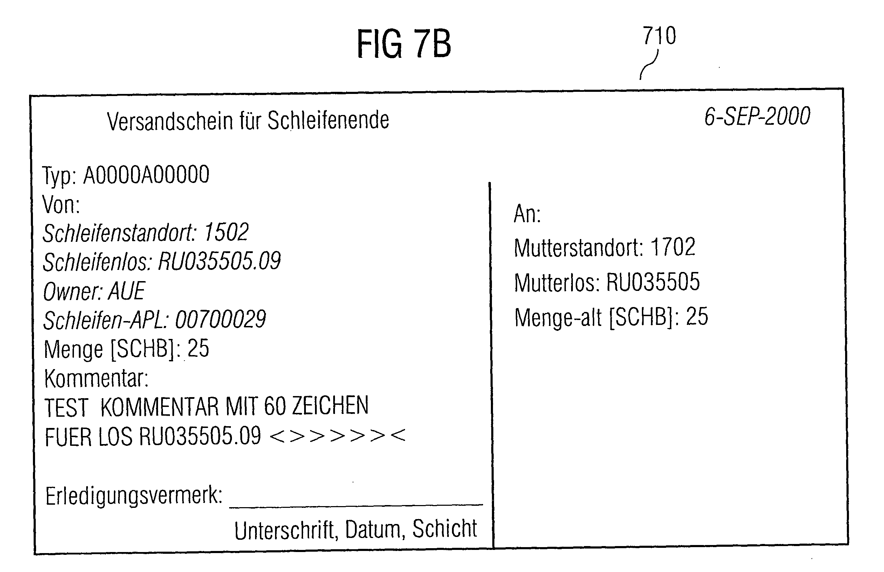

In einem weiteren Schritt wird vor Absenden des physikalischen Loses 103 von dem zweiten Bearbeitungsstandort 102 zu dem ersten Bearbeitungsstandort 101 von dem weiteren Bearbeitungsprogramm 411 ein weiterer Versandschein 710 physikalisch ausgedruckt und dem nunmehr an dem zweiten Bearbeitungsstandort fertig bearbeiteten Los 103 beigefügt für den Transport zu dem ersten Bearbeitungsstandort 101 (vgl. **Fig.7b**) (Schritt 804).

**Fig.9** zeigt in einem weiteren Nachrichtenflussdiagramm 900 die von dem Bearbeitungsprogramm 401 an dem ersten Bearbeitungsstandort 101 durchgeführten Verfahrensschritte nach Empfang der zweiten Transfer-Nachricht 211.

In einem ersten Schritt (Schritt 901) wird die zweite Transfer-Nachricht 211 aus dem vorgesehenen Verzeichnis in dem ersten Computer 201 ausgelesen.

In einem weiteren Schritt (Schritt 902) wird für den Fall, wenn sich das Los 103 noch auf der Transportstrecke von dem zweiten Bearbeitungsstandort 102 zu dem ersten Bearbeitungsstandort 101 befindet, wird im Rahmen der zweiten Transfer-Operation 124 mittels des Befehls
**"TRST moves a lot to a store operation"**
bei Eintreffen des physikalischen Loses 103 an dem ersten Bearbeitungsstandort 101 das Los 103 von der Speicher-Operation zu der Operation 117 überführt, von dem ausgehend das logische Los wieder in die weiteren Bearbeitungsschritte 117, 118, 119 der dritten Bearbeitungssequenz 108 an dem ersten Bearbeitungsstandort 101 eingefügt wird..

Mittels eines weiteren Befehls 903 wird in dem Programmpaket Workstream™ zu dem Los 103 mittels des Befehls
**"RADL RemoteAdjustLot"**
auf die ursprüngliche Auftragsart, die dem Los 103 zugeordnet war während der ersten Bearbeitungssequenz 106, zurückgestellt.

Weiterhin wird mittels dieses Befehls die Anzahl der in dem Los 103 enthaltenen Wafer aktualisiert.

Dies ist beispielsweise erforderlich, da in der zweiten Bearbeitungssequenz 107 bei dem zweiten Bearbeitungsstandort 102 während der einzelnen Bearbeitungsschritte ohne weiteres Ausschuss produziert werden kann, was an dem ersten Bearbeitungsstandort 101 von dem Bearbeitungsprogramm 401 erkannt und berücksichtigt werden sollte.

Weiterhin wird dem Los 103 eine logische Rückkehr-Operation 116 zugeordnet.

In einem weiteren Schritt werden die in der zweiten Transfer-Nachricht 211 enthaltenen globalen Los-Attribute in der Datenbankstruktur, die in dem ersten Computer 201 gespeichert ist, aktualisiert (Schritt 904) mittels des Befehls
**"RSLA SET LOT ATTRIBUTES".**

Es ist anzumerken, dass die Erfindung nicht auf die Herstellung und Bearbeitung von Halbleiter-Wafern und der Überwachung von Halbleiter-Losen beschränkt ist.

Vielmehr ist die Erfindung im gesamten Einsatzbereich anwendbar, bei dem es gilt, ein Produkt herzustellen unter Einsatz einer Vielzahl unterschiedlicher Bearbeitungsschritte, von denen ein erster Teil der Bearbeitungsschritte des gesamten Bearbeitungsprozesses an einem ersten Bearbeitungsstandort und ein weiterer Teil der Bearbeitungsschritte für das jeweilige Produkt an mindestens einem weiteren Bearbeitungsstandort durchgeführt wird.

In diesem Dokument sind folgende Veröffentlichungen zitiert:
[1] Systembeschreibung des Programmpakets Workstream Open™ der Firma Consilium™ , Mai 1993.
[2] WO 00/11577
[3] WO 99/23582

### Bezugszeichenliste

- 100: Blockdiagramm
- 101: Erster Bearbeitungsstandort
- 102: Zweiter Bearbeitungsstandort
- 103: Los
- 104: Gesamtprozess
- 105: Fertiggestelltes Los
- 106: Erste Bearbeitungssequenz
- 107: Zweite Bearbeitungssequenz
- 108: Dritte Bearbeitungssequenz
- 109: Erster Bearbeitungsschritt erste Bearbeitungssequenz
- 110: Zweiter Bearbeitungsschritt erste Bearbeitungssequenz
- 111: Dritter Bearbeitungsschritt erste Bearbeitungssequenz
- 112: Erster Bearbeitungsschritt zweite Bearbeitungssequenz
- 113: Zweiter Bearbeitungsschritt zweite Bearbeitungssequenz
- 114: Dritter Bearbeitungsschritt zweite Bearbeitungssequenz
- 115: Transfer-Bearbeitungsschritt
- 116: Transfer-Bearbeitungsschritt
- 117: Erster Bearbeitungsschritt dritte Bearbeitungssequenz
- 118: Zweiter Bearbeitungsschritt dritte Bearbeitungssequenz
- 119: Dritter Bearbeitungsschritt dritte Bearbeitungssequenz
- 120: Pfeil
- 121: Erste Transfer-Operation
- 122: Los-Nummer
- 123: Pfeil
- 124: Zweite Transfer-Operation
- 125: Pfeil

- 200: Blockdiagramm
- 201: Erster Computer
- 202: Zweiter Computer
- 203: Server-Computer
- 204: Speicher
- 205: Transferliste
- 206: Erste Anforderungsnachricht
- 207: Erste Teil-Transferliste
- 208: Zweite Anforderungsnachricht
- 209: Zweite Teil-Transferliste
- 210: Erste Transfer-Nachricht
- 211: Zweite Transfer-Nachricht

- 300: Transferliste

- 400: Software-Architektur
- 401: Bearbeitungsprogramm
- 402: Schnittstelle
- 403: Betriebssystem VMS
- 404: Programmpaket Workstream™
- 405: Daten
- 406: Datei
- 407: Betriebssystem Windows NT
- 408: Erste Programmkomponente
- 409: Zweite Programmkomponente
- 410: Intitialisierungsdatei
- 411: Weiteres Bearbeitungsprogramm
- 412: Datei

- 500: Nachrichtenflussdiagramm
- 501: Stammdaten-Anforderungsbefehl
- 502: Stammdaten
- 503: Überprüfungsschritt
- 504: Los-Attribut-Anforderungsbefehl
- 505: Los-Attribut
- 506: Auftragsart-Änderungsbefehl
- 507: weiterer Befehl
- 508: Erzeugen zweite Los-Kennzeichnung
- 509: Speichern zweite Los-Kennzeichnung, Schleifenzähler ursprüngliche Auftragsart
- 510: Drucken Versandschein
- 511: Erzeugen Datei mit den erforderlichen Informationen über das Los
- 512: Übermitteln erste Transfer-Nachricht an zweiten Computer

- 600: Bildschirmoberfläche
- 601: Lager-Operations-Feld
- 610: Zweite Bildschirmoberfläche
- 611: Los-Nummer-Feld
- 612: Kommentar-Feld
- 613: Auswahl-Feld

- 700: Versandschein
- 710: Versandschein

- 800: Ablaufdiagramm
- 801: Auslesen empfangene erste Transfer-Nachricht
- 802: Erzeugen Schleifen-Los
- 803: Speichern Los-Attribute
- 804: Drucken weiterer Versandschein

- 900: Nachrichtenflussdiagramm
- 901: Auslesen zweite Transfer-Nachricht aus dem Verzeichnis in ersten Computer
- 902: Zuordnen Speicher-Operation
- 903: weiterer Befehl
- 904: Aktualisieren globale Los-Attribute

## Patentansprüche

1. Verfahren zum Bearbeiten eines physikalischen Objekts, wobei jedem physikalischen Objekt in einem Bearbeitungsprogramm ein logisches Objekt zugeordnet ist,
• bei dem bei Bearbeiten des physikalischen Objekts an einem ersten Bearbeitungsstandort dem logischen Objekt in dem Bearbeitungsprogramm eine erste Objekt-Kennzeichnung zugeordnet wird,
• wobei mit der ersten Objekt-Kennzeichnung angegeben wird, dass das physikalische Objekt an dem ersten Bearbeitungsstandort bearbeitet wird,
• bei dem bei Transport des physikalischen Objekts von dem ersten Bearbeitungsstandort zu einem zweiten Bearbeitungsstandort, an dem das physikalische Objekt ebenfalls bearbeitet wird, dem logischen Objekt in dem Bearbeitungsprogramm eine zweite Objekt-Kennzeichnung zugeordnet wird,
• wobei mit der zweiten Objekt-Kennzeichnung angegeben wird, dass das physikalische Objekt an dem zweiten Bearbeitungsstandort bearbeitet wird, und
• wobei aufgrund der zweiten Objekt-Kennzeichnung von dem Bearbeitungsprogramm das logische Objekt als am ersten Bearbeitungsstandort verblieben interpretiert wird, und
• bei dem nach erfolgter Bearbeitung des physikalischen Objekts am zweiten Bearbeitungsstandort und bei Transport des physikalischen Objekts von dem zweiten Bearbeitungsstandort zu dem ersten Bearbeitungsstandort dem logischen Objekt in dem Bearbeitungsprogramm eine dritte Objekt-Kennzeichnung zugeordnet wird,
• wobei mit der dritten Objekt-Kennzeichnung angegeben wird, dass das physikalische Objekt an dem ersten Bearbeitungsstandort bearbeitet wird.

2. Verfahren nach Anspruch 1,
bei dem aufgrund der zweiten Objekt-Kennzeichnung von dem Bearbeitungsprogramm das logische Objekt im Rahmen einer Objekt-Bearbeitungsplanung am ersten Bearbeitungsstandort als am ersten Bearbeitungsstandort verblieben interpretiert wird.

3. Verfahren nach Anspruch 1 oder 2,
bei dem die erste Objekt-Kennzeichnung gleich ist der dritten Objekt-Kennzeichnung.

4. Verfahren nach einem der Ansprüche 1 bis 3,
bei dem zu dem logischen Objekt eine Bearbeitungshistorie des zugehörigen physikalischen Objekts gespeichert wird, in der die einzelnen Bearbeitungsschritte, denen das physikalische Objekt unterzogen wird, gespeichert sind.

5. Verfahren nach einem der Ansprüche 1 bis 4,
bei dem dem logischen Objekt zusätzliche Bearbeitungsparameter zugeordnet werden und mit diesem gespeichert werden, wobei die Bearbeitungsparameter jeweils einen oder mehrere Bearbeitungsschritte charakterisieren.

6. Verfahren nach einem der Ansprüche 1 bis 5,
bei dem die Bearbeitung des physikalischen Objekts gemäß einem elektronischen Arbeitsplan erfolgt, in dem einzelne Bearbeitungsschritte zum Bearbeiten eines physikalischen Objekts zur Herstellung für ein vorgegebenes Produkt enthalten sind.

7. Verfahren nach einem der Ansprüche 1 bis 6,
• bei dem von dem Bearbeitungsprogramm überprüft wird, ob eine Bearbeitung des physikalischen Objekts an dem zweiten Bearbeitungsstandort zulässig ist, und
• bei dem das Verfahren von dem Bearbeitungsprogramm nur fortgesetzt wird, wenn die Bearbeitung des physikalischen Objekts an dem zweiten Bearbeitungsstandort zulässig ist.

8. Verfahren nach einem der Ansprüche 1 bis 7,
bei dem von einem Server-Computer dem physikalischen Objekt zugeordnete Stammdaten an das Bearbeitungsprogramm übermittelt werden, wobei mit den Stammdaten das physikalische Objekt charakterisiert wird.

9. Verfahren nach Anspruch 8,
• bei dem zumindest ein Teil der Stammdaten von dem Bearbeitungsprogramm am ersten Bearbeitungsstandort zu einem weiteren Bearbeitungsprogramm am zweiten Bearbeitungsstandort übertragen wird, und
• bei dem von dem weiteren Bearbeitungsprogramm zumindest ein Teil der Stammdaten und/oder ein Teil veränderter Stammdaten zu dem Bearbeitungsprogramm übertragen werden.

10. Verfahren nach einem der Ansprüche 1 bis 9,
bei dem als physikalisches Objekt eine Mehrzahl zu einer Wafer-Gruppe gruppierte Wafer verwendet werden.

11. Vorrichtung zum Bearbeiten eines physikalischen Objekts, wobei jedem physikalischen Objekt in einem Bearbeitungsprogramm ein logisches Objekt zugeordnet ist, mit einem Prozessor, der derart eingerichtet ist, dass folgende Verfahrensschritte durchführbar sind:
• bei Bearbeiten des physikalischen Objekts an einem ersten Bearbeitungsstandort wird dem logischen Objekt in dem Bearbeitungsprogramm eine erste Objekt-Kennzeichnung zugeordnet,
• wobei mit der ersten Objekt-Kennzeichnung angegeben wird, dass das physikalische Objekt an dem ersten Bearbeitungsstandort bearbeitet wird,
• bei Transport des physikalischen Objekts von dem ersten Bearbeitungsstandort zu einem zweiten Bearbeitungsstandort, an dem das physikalische Objekt ebenfalls bearbeitet wird, wird dem logischen Objekt in dem Bearbeitungsprogramm eine zweite Objekt-Kennzeichnung zugeordnet,
• wobei mit der zweiten Objekt-Kennzeichnung angegeben wird, dass das physikalische Objekt an dem zweiten Bearbeitungsstandort bearbeitet wird, und
• wobei aufgrund der zweiten Objekt-Kennzeichnung von dem Bearbeitungsprogramm das logische Objekt als am ersten Bearbeitungsstandort verblieben interpretiert wird, und
• nach erfolgter Bearbeitung des physikalischen Objekts am zweiten Bearbeitungsstandort und bei Transport des physikalischen Objekts von dem zweiten Bearbeitungsstandort zu dem ersten Bearbeitungsstandort wird dem logischen Objekt in dem Bearbeitungsprogramm eine dritte Objekt-Kennzeichnung zugeordnet,
• wobei mit der dritten Objekt-Kennzeichnung angegeben wird, dass das physikalische Objekt an dem ersten Bearbeitungsstandort bearbeitet wird.

12. Computerlesbares Speichermedium, in dem ein Bearbeitungsprogramm zum Bearbeiten eines physikalischen Objekts, wobei jedem physikalischen Objekt in dem Bearbeitungsprogramm ein logisches Objekt zugeordnet ist, gespeichert ist, das, wenn es von einem Prozessor ausgeführt wird, folgende Verfahrensschritte aufweist:
• bei Bearbeiten des physikalischen Objekts an einem ersten Bearbeitungsstandort wird dem logischen Objekt in dem Bearbeitungsprogramm eine erste Objekt-Kennzeichnung zugeordnet,
• wobei mit der ersten Objekt-Kennzeichnung angegeben wird, dass das physikalische Objekt an dem ersten Bearbeitungsstandort bearbeitet wird,
• bei Transport des physikalischen Objekts von dem ersten Bearbeitungsstandort zu einem zweiten Bearbeitungsstandort, an dem das physikalische Objekt ebenfalls bearbeitet wird, wird dem logischen Objekt in dem Bearbeitungsprogramm eine zweite Objekt-Kennzeichnung zugeordnet,
• wobei mit der zweiten Objekt-Kennzeichnung angegeben wird, dass das physikalische Objekt an dem zweiten Bearbeitungsstandort bearbeitet wird, und
• wobei aufgrund der zweiten Objekt-Kennzeichnung von dem Bearbeitungsprogramm das logische Objekt als am ersten Bearbeitungsstandort verblieben interpretiert wird, und
• nach erfolgter Bearbeitung des physikalischen Objekts am zweiten Bearbeitungsstandort und bei Transport des physikalischen Objekts von dem zweiten Bearbeitungsstandort zu dem ersten Bearbeitungsstandort wird dem logischen Objekt in dem Bearbeitungsprogramm eine dritte Objekt-Kennzeichnung zugeordnet,
• wobei mit der dritten Objekt-Kennzeichnung angegeben wird, dass das physikalische Objekt an dem ersten Bearbeitungsstandort bearbeitet wird.

13. Bearbeitungsprogramm-Element zum Bearbeiten eines physikalischen Objekts, wobei jedem physikalischen Objekt in dem Bearbeitungsprogramm ein logisches Objekt zugeordnet ist, das, wenn es von einem Prozessor ausgeführt wird, folgende Verfahrensschritte aufweist:
• bei Bearbeiten des physikalischen Objekts an einem ersten Bearbeitungsstandort wird dem logischen Objekt in dem Bearbeitungsprogramm eine erste Objekt-Kennzeichnung zugeordnet,
• wobei mit der ersten Objekt-Kennzeichnung angegeben wird, dass das physikalische Objekt an dem ersten Bearbeitungsstandort bearbeitet wird,
• bei Transport des physikalischen Objekts von dem ersten Bearbeitungsstandort zu einem zweiten Bearbeitungsstandort, an dem das physikalische Objekt ebenfalls bearbeitet wird, wird dem logischen Objekt in dem Bearbeitungsprogramm eine zweite Objekt-Kennzeichnung zugeordnet,
• wobei mit der zweiten Objekt-Kennzeichnung angegeben wird, dass das physikalische Objekt an dem zweiten Bearbeitungsstandort bearbeitet wird, und
• wobei aufgrund der zweiten Objekt-Kennzeichnung von dem Bearbeitungsprogramm das logische Objekt als am ersten Bearbeitungsstandort verblieben interpretiert wird, und
• nach erfolgter Bearbeitung des physikalischen Objekts am zweiten Bearbeitungsstandort und bei Transport des physikalischen Objekts von dem zweiten Bearbeitungsstandort zu dem ersten Bearbeitungsstandort wird dem logischen Objekt in dem Bearbeitungsprogramm eine dritte Objekt-Kennzeichnung zugeordnet,
• wobei mit der dritten Objekt-Kennzeichnung angegeben wird, dass das physikalische Objekt an dem ersten Bearbeitungsstandort bearbeitet wird.
